# EUROPEAN PATENT APPLICATION

(11) **EP 4 576 728 A1**
(43) Date of publication of application: **25.06.2025**
(21) Application number: 23307286.7
(22) Date of filing: 20.12.2023
(51) Int. Cl.: H04L 51/02, H04L 51/046, H04L 51/214, H04L 12/18, H04L 51/04

(54) **DEVICE, SYSTEM AND METHOD FOR EFFICIENTLY ESTABLISHING COMMUNICATION LINKS IN INTERACTION ENVIRONMENTS WHEN INTERMEDIATING BETWEEN DEVICES**

(71) Applicant: Amadeus S.A.S., 06410 Biot (FR)
(72) Inventor: BOUDIA, Mourad, 06560 Valbonne (FR); TEXIER, Rodolphe, 06220 Vallauris (FR); HAUVILLER, Nicolas, 06560 Valbonne (FR); BEN ROMDHANNE, Bilel, 06650 Opio (FR)
(74) Representative: Samson & Partner Patentanwälte mbB

(57) **Abstract**

A chatbot manager engine operates a chatbot in an interaction environment, and controls an electronic interaction therein, between the chatbot and input received from a client device operated by a human user. The chatbot manager engine assigns a score to the electronic interaction, indicating likelihood that the chat manager engine electronically resolves one or more requests received from the client device in the electronic interaction. When the score meets a threshold score, the chatbot manager engine electronically connects the electronic interaction with a human-operated terminal to at least temporarily, and at least partially, take over the electronic interaction, the connection occurring, at least initially, via the chat manager engine. The chat manager engine, or a server implementing the chat manager engine, collects information associated with the electronic interaction with the terminal, and one or more of responds to and fulfills the one or more requests based on the information.

## Description

### FIELD

The specification relates generally to intermediation between devices, and specifically to a device, system and method for efficiently establishing communication links in interaction environments when intermediating between devices.

### BACKGROUND

Interaction environments generally rely on communication links between devices, such as client devices and interaction environment servers and/or interaction environment engines, to operate. However, such interaction environments generally require many communication links, which can be a waste of bandwidth and/or processing resources when some communication links are redundant and/or not required and/or only temporarily required.

### SUMMARY

A first aspect of the present specification provides a method comprising: operating, via a chat manager engine, a chatbot in an interaction environment; controlling, via the chat manager engine, an electronic interaction, in the interaction environment, between the chatbot and input received from a client device operated by a human user; assigning, via the chat manager engine, a score to the electronic interaction, the score indicating likelihood that the chat manager engine electronically resolves one or more requests received from the client device in the electronic interaction; when the score meets a threshold score, electronically connecting, via the chat manager engine, the electronic interaction with a human-operated terminal to at least temporarily, and at least partially, take over the electronic interaction, the connection occurring, at least initially, via the chat manager engine; collecting, via the chat manager engine or a server implementing the chat manager engine, information associated with the electronic interaction with the human-operated terminal; and one or more of responding to, and fulfilling the one or more requests, via one or more of the chat manager engine and the human-operated terminal, based on the information.

At the method of the first aspect, the chatbot may comprise one of a web-based chatbot and an electronic non-player character, and the interaction environment correspondingly may comprise one of a web-based chat environment and an immersive environment.

At the method of the first aspect, the score may be based on one or more of: a defined value associated with the one or more requests, the score changing as the defined value changes; and a complexity of the one or more requests, the score changing as the complexity increases as a number of items or provider objects associated with the one or more requests increases, the provider objects representing goods or services offered by one or more provider systems.

At the method of the first aspect, operating the chatbot in the interaction environment may occur while concurrently implementing a computing-process flow for fulfilling the one or more requests, and one or more of collecting the information from the electronic interaction with the human-operated terminal, responding the one or more requests, and fulfilling the one or more requests, may occur in conjunction with implementing one or more steps of the computing-process flow.

At the method of the first aspect, the chatbot may comprise an electronic non-player character and the interaction environment may comprise an immersive environment, and electronically connecting the electronic interaction with the human-operated terminal may comprise: adding into the immersive environment, a player avatar at least partially operated via the human-operated terminal.

At the method of the first aspect, the chatbot may comprise an electronic non-player character and the interaction environment may comprise an immersive environment, and electronically connecting the electronic interaction with the human-operated terminal may comprise: adding, via an interface adapter engine, into the immersive environment, a player avatar, the human-operated terminal controlling speech or text of the player avatar; and transferring control of other operations of the player avatar to the interface adapter engine, the interface adapter engine providing an interface between the immersive environment and the human-operated terminal.

At the method of the first aspect, the chatbot may comprise an electronic non-player character and the interaction environment may comprise an immersive environment, and electronically connecting the electronic interaction with the human-operated terminal may comprise: enabling, via the chat manager engine, the human-operated terminal to control speech or text of the electronic non-player character, while the chat manager engine maintains control over other operations of the electronic non-player character.

At the method of the first aspect, electronically connecting the electronic interaction with the human-operated terminal may further occur via an interface adapter engine, and the method of the first aspect may further comprise: adapting, via the interface adapter engine, data exchanged between the interaction environment and the human-operated terminal for the interaction environment and the human-operated terminal.

At the method of the first aspect, electronically connecting the electronic interaction with the human-operated terminal may further occur via an interface adapter engine, and the method may further comprise: providing, via the interface adapter engine, at an output device of the human-operated terminal a user interface component that, when actuated, causes the human-operated terminal to at least temporarily, and at least partially, take over the electronic interaction; and, when actuation of the user interface component is received, electronically connecting, via the chat manager engine and the interface adapter engine, the electronic interaction with the human-operated terminal.

At the method of the first aspect, one or more of responding to, and fulfilling the one or more requests, via one or more of the chat manager engine and the human-operated terminal, based on the information may comprise: transferring full control of the electronic interaction back to the chat manager engine prior to fulfilling the one or more requests; and fulfilling the one or more requests via the chat manager engine based the information collected via the human-operated terminal.

A second aspect of the present specification provides a computing device comprising: a communication interface; a controller; and a computer-readable storage medium having stored thereon program instructions that, when executed by the controller, cause the controller to perform a set of operations comprising: operating, via a chat manager engine, a chatbot in an interaction environment; controlling, via the chat manager engine, an electronic interaction, in the interaction environment, between the chatbot and input received from a client device operated by a human user; assigning, via the chat manager engine, a score to the electronic interaction, the score indicating likelihood that the chat manager engine electronically resolves one or more requests received from the client device in the electronic interaction; when the score meets a threshold score, electronically connecting, via the chat manager engine, the electronic interaction with a human-operated terminal to at least temporarily, and at least partially, take over the electronic interaction, the connection occurring, at least initially, via the chat manager engine; collecting, via the chat manager engine or a server implementing the chat manager engine, information associated with the electronic interaction with the human-operated terminal; and one or more of responding to, and fulfilling the one or more requests, via one or more of the chat manager engine and the human-operated terminal, based on the information.

At the computing device of the second aspect, the chatbot may comprise one of a web-based chatbot and an electronic non-player character, and the interaction environment correspondingly may comprise one of a web-based chat environment and an immersive environment.

At the computing device of the second aspect, the score may be based on one or more of: a defined value associated with the one or more requests, the score changing as the defined value changes; and a complexity of the one or more requests, the score changing as the complexity increases as a number of items or provider objects associated with the one or more requests increases, the provider objects representing goods or services offered by one or more provider systems.

At the computing device of the second aspect, the set of operations may further comprise: operating the chatbot in the interaction environment occurs while concurrently implementing a computing-process flow for fulfilling the one or more requests, and one or more of collecting the information from the electronic interaction with the human-operated terminal, responding the one or more requests, and fulfilling the one or more requests, may occur in conjunction with implementing one or more steps of the computing-process flow.

At the computing device of the second aspect, the chatbot may comprise an electronic non-player character and the interaction environment may comprise an immersive environment, and the set of operations may further comprise electronically connecting the electronic interaction with the human-operated terminal by: adding into the immersive environment, a player avatar at least partially operated via the human-operated terminal.

At the computing device of the second aspect, the chatbot may comprise an electronic non-player character and the interaction environment may comprise an immersive environment, and the set of operations may further comprise electronically connecting the electronic interaction with the human-operated terminal by: adding, via an interface adapter engine, into the immersive environment, a player avatar, the human-operated terminal controlling speech or text of the player avatar; and transferring control of other operations of the player avatar to the interface adapter engine, the interface adapter engine providing an interface between the immersive environment and the human-operated terminal.

At the computing device of the second aspect, the chatbot may comprise an electronic non-player character and the interaction environment may comprise an immersive environment, and the set of operations may further comprise electronically connecting the electronic interaction with the human-operated terminal by: enabling, via the chat manager engine, the human-operated terminal to control speech or text of the electronic non-player character, while the chat manager engine maintains control over other operations of the electronic non-player character.

At the computing device of the second aspect, electronically connecting the electronic interaction with the human-operated terminal may further occur via an interface adapter engine, and the set of operations may further comprise: adapting, via the interface adapter engine, data exchanged between the interaction environment and the human-operated terminal for the interaction environment and the human-operated terminal.

At the computing device of the second aspect, electronically connecting the electronic interaction with the human-operated terminal may further occur via an interface adapter engine, and the set of operations may further comprise: providing, via the interface adapter engine, at an output device of the human-operated terminal a user interface component that, when actuated, causes the human-operated terminal to at least temporarily, and at least partially, take over the electronic interaction; and, when actuation of the user interface component is received, electronically connecting, via the chat manager engine and the interface adapter engine, the electronic interaction with the human-operated terminal.

At the computing device of the second aspect, and the set of operations may further comprise one or more of responding to, and fulfilling the one or more requests, via one or more of the chat manager engine and the human-operated terminal, based on the information by: transferring full control of the electronic interaction back to the chat manager engine prior to fulfilling the one or more requests; and fulfilling the one or more requests via the chat manager engine based the information collected via the human-operated terminal.

A third aspect of the present specification provides a non-transitory computer-readable storage medium having stored thereon program instructions that, when executed by a server, causes the server to perform a method comprising: operating, via a chat manager engine, a chatbot in an interaction environment; controlling, via the chat manager engine, an electronic interaction, in the interaction environment, between the chatbot and input received from a client device operated by a human user; assigning, via the chat manager engine, a score to the electronic interaction, the score indicating likelihood that the chat manager engine electronically resolves one or more requests received from the client device in the electronic interaction; when the score meets a threshold score, electronically connecting, via the chat manager engine, the electronic interaction with a human-operated terminal to at least temporarily, and at least partially, take over the electronic interaction, the connection occurring, at least initially, via the chat manager engine; collecting, via the chat manager engine or the server implementing the chat manager engine, information associated with the electronic interaction with the human-operated terminal; and one or more of responding to, and fulfilling the one or more requests, via one or more of the chat manager engine and the human-operated terminal, based on the information.

At the method of the third aspect, the chatbot may comprise one of a web-based chatbot and an electronic non-player character, and the interaction environment correspondingly may comprise one of a web-based chat environment and an immersive environment.

At the method of the third aspect, the score may be based on one or more of: a defined value associated with the one or more requests, the score changing as the defined value changes; and a complexity of the one or more requests, the score changing as the complexity increases as a number of items or provider objects associated with the one or more requests increases, the provider objects representing goods or services offered by one or more provider systems.

At the method of the third aspect, operating the chatbot in the interaction environment may occur while concurrently implementing a computing-process flow for fulfilling the one or more requests, and one or more of collecting the information from the electronic interaction with the human-operated terminal, responding the one or more requests, and fulfilling the one or more requests, may occur in conjunction with implementing one or more steps of the computing-process flow.

At the method of the third aspect, the chatbot may comprise an electronic non-player character and the interaction environment may comprise an immersive environment, and electronically connecting the electronic interaction with the human-operated terminal may comprise: adding into the immersive environment, a player avatar at least partially operated via the human-operated terminal.

At the method of the third aspect, the chatbot may comprise an electronic non-player character and the interaction environment may comprise an immersive environment, and electronically connecting the electronic interaction with the human-operated terminal may comprise: adding, via an interface adapter engine, into the immersive environment, a player avatar, the human-operated terminal controlling speech or text of the player avatar; and transferring control of other operations of the player avatar to the interface adapter engine, the interface adapter engine providing an interface between the immersive environment and the human-operated terminal.

At the method of the third aspect, the chatbot may comprise an electronic non-player character and the interaction environment may comprise an immersive environment, and electronically connecting the electronic interaction with the human-operated terminal may comprise: enabling, via the chat manager engine, the human-operated terminal to control speech or text of the electronic non-player character, while the chat manager engine maintains control over other operations of the electronic non-player character.

At the method of the third aspect, electronically connecting the electronic interaction with the human-operated terminal may further occur via an interface adapter engine, and the method of the third aspect may further comprise: adapting, via the interface adapter engine, data exchanged between the interaction environment and the human-operated terminal for the interaction environment and the human-operated terminal.

At the method of the third aspect, electronically connecting the electronic interaction with the human-operated terminal may further occur via an interface adapter engine, and the method may further comprise: providing, via the interface adapter engine, at an output device of the human-operated terminal a user interface component that, when actuated, causes the human-operated terminal to at least temporarily, and at least partially, take over the electronic interaction; and, when actuation of the user interface component is received, electronically connecting, via the chat manager engine and the interface adapter engine, the electronic interaction with the human-operated terminal.

At the method of the third aspect, one or more of responding to, and fulfilling the one or more requests, via one or more of the chat manager engine and the human-operated terminal, based on the information may comprise: transferring full control of the electronic interaction back to the chat manager engine prior to fulfilling the one or more requests; and fulfilling the one or more requests via the chat manager engine based the information collected via the human-operated terminal.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for efficiently establishing communication links in interaction environments when intermediating between devices, according to non-limiting examples.
FIG. 2 depicts an intermediation server for controlling operation of a client device, according to non-limiting examples.
FIG. 3 depicts a computing-process flow implemented at a client device of the system of FIG. 1, according to non-limiting examples.
FIG. 4 depicts the system of FIG. 1 in further detail, with a chat manager engine attempting to resolve requests from a client device to minimize communication links in the system, according to non-limiting examples.
FIG. 5 depicts the system of FIG. 1 in further detail, with the chat manager engine continuing to resolve requests from a client device to minimize communication links in the system, according to non-limiting examples.
FIG. 6 depicts the system of FIG. 1 in further detail, with the chat manager engine further continuing to resolve requests from a client device to minimize communication links in the system, according to non-limiting examples.
FIG. 7 depicts a method for efficiently establishing communication links in interaction environments when intermediating between devices, according to non-limiting examples.
FIG. 8 depicts the system as depicted in FIG. 4 implementing aspects of a method for efficiently establishing communication links in interaction environments when intermediating between devices, according to non-limiting examples.
FIG. 9 depicts the system as depicted in FIG. 4 continuuing to implement aspects of a method for efficiently establishing communication links in interaction environments when intermediating between devices, according to non-limiting examples.
FIG. 10 depicts the system as depicted in FIG. 4 continuuing to implement aspects of a method for efficiently establishing communication links in interaction environments when intermediating between devices, according to non-limiting examples.
FIG. 11 depicts the system as depicted in FIG. 4 continuuing to implement aspects of a method for efficiently establishing communication links in interaction environments when intermediating between devices, according to non-limiting examples.
FIG. 12 depicts the system as depicted in FIG. 4 continuuing to implement aspects of a method for efficiently establishing communication links in interaction environments when intermediating between devices, according to non-limiting examples.
FIG. 13 depicts the system as depicted in FIG. 4 continuuing to implement aspects of a method for efficiently establishing communication links in interaction environments when intermediating between devices, according to non-limiting examples.

### DETAILED DESCRIPTION

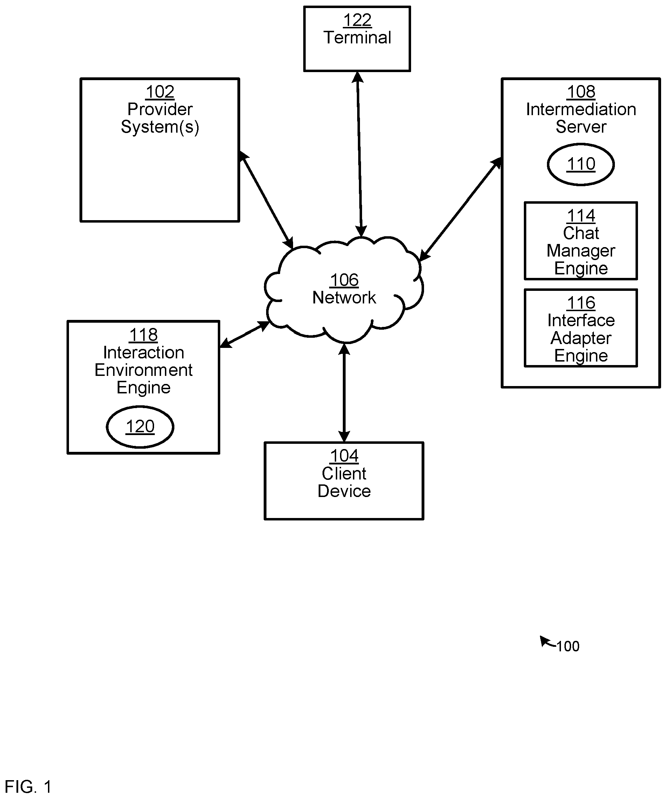

FIG. 1 depicts a system 100 for intermediation between a provider system and a client device. The system 100 includes one or more provider systems 102 (e.g., one or more servers or other suitable computing devices), which may be operated by one or more provider entities to provide provider objects. The system 100 may include a plurality of client devices 104, although only one client device 104 is shown in FIG. 1 for illustrative purposes.

Provider objects, in the examples discussed herein, may comprise provider objects and/or data records which correspond to products and/or items, such as travel-related goods and services (e.g., flights, hotel reservations, car rentals and the like), provided by a provider system 102. More specifically, the products and/or items discussed in the examples below may be flight tickets and related services (e.g., limo pickup services, excursions at a destination, baggage check services, in-flight food, entertainment, pet-related services, and the like). However, as will be apparent to those skilled in the art, the systems and methods discussed below may also be applied to various other types of data objects and/or items including, but not limited to, data objects corresponding to any suitable products and/or any suitable items available from any suitable website, and the like. As will be described below, however, certain provider objects may be provided in any other suitable manner (e.g., by computing devices other than the provider systems 102).

Delivery of the items mentioned above is typically controlled by a provider entity operating a provider system 102, such as an airline in the case of the items discussed in connection with the examples provided herein.

The system 100 may include a plurality of provider systems 102, each operated by respective provider entities (e.g., various airlines), although only one provider system 102 is shown for illustrative purposes. The provider objects may be in any suitable format including, but not limited to Edifact recommendations in the context of Global Distribution System (GDS)-based data exchange, offer records in the context of New Distribution Capability (NDC)-based data exchange, and/or any other suitable format. Indeed, the provider objects may comprise data objects and/or data records, for example storing an Edifact recommendation or an NDC offer, and/or any other suitable data representing at least one item provided by the provider system 102.

A provider object is understood to define an item, or a combination of items, which may be offered for purchase (e.g., by end users of the items) including, but not limited to one or more of flights, train rides, hotel stays, airport lounge access, seat upgrades, baggage check services, in-flight food, entertainment, pickup services, excursion services, pet-related services, and the like, and/or associated services. Thus, in examples discussed below, a provider object may define a flight operated by the provider entity, and/or services associated with the flight, or proposed as standalone services. Each provider object therefore may contain various fields (e.g., data fields), and the like. Certain fields define item attributes, such as product object identifiers (e.g., service identifiers, item identifiers, product identifiers and the like), locations, dates and times corresponding to the products (e.g., flight times and other itinerary data). The type of fields and/or data of a provider object may depend on a type of a provider object. For example, provider objects corresponding to flights may include flight identifiers, whereas provider objects corresponding to other travel-related items, such as an offer for accessing an airport lounge and/or an offer for a premium seat upgrade, may include information related to the lounge, the premium seat, etc.

Requests for provider objects may be received at the provider system 102 from other components of the system 100. For example, the requests may be received from a client device 104, via a network 106 (e.g., any suitable combination of local and wide area networks, including the Internet) and via an intermediation server 108. As will be described below, the intermediation server 108 generally intermediates between the client device 104 and the provider system 102, such that the client device 104 may request provider objects from the provider system 102, and/or more than one provider system 102, via the intermediation server 108.

Furthermore, the intermediation server 108 may convert data between formats associated with provider systems 102 and the client device 104. For example, a first provider system 102 may communicate and/or provide provider objects, and/or offers for provider objects, according to a first standard type, and a second provider system 102 may communicate and/or provide provider objects, and/or offers for provider objects, according to a second standard type (e.g., which may be the same or different from the first standard type). Neither standard type may be compatible with a format used by the client device 104 to communicate. As such, the intermediation server 108 may convert data received in different formats from the provider system 102, to a format compatible with the client device 104, and vice versa. As will be described herein, such conversion may comprise converting the data received from a provider system 102 into text, and/or aural responses, and the like, to be provided within an interaction environment.

The client device 104, in the present example, may be operated by a travel agent entity, and therefore generates and provides requests for provider objects (e.g., representing products which may be for purchase), and/or requests to purchase items (e.g., represented by the provider objects), to the provider system 102, via the intermediation server 108, on behalf of end users (e.g., travelers). As will be described herein, such requests may comprise text and/or aural requests within an interaction environment, converting the data received from a provider system 102 into text, aural responses, and the like, provided within an interaction environment.

In one example, the intermediation server 108 may comprise an aggregator server which communicates with a plurality of provider systems 102 and aggregates provider objects and/or offers for provider objects from the plurality of provider system 102, to provide to the client device 104.

Various mechanisms for the creation of provider objects will be apparent to those skilled in the art, such as the "offer" and "order" mechanisms specified by the NDC standard.

The creation of provider objects in response to requests is not discussed in further detail herein.

The provider objects provided by the provider system 102 generally include provider object data representing at least one item provided by the provider system 102. In some examples, the provider object data may include a provider object identifier and/or provider object identifier data, that identifies the provider object to the provider system 102. In particular examples related to the travel industry, the provider object data may generally comprise information that identifies a travel related product and/or service. Whether the provider object data includes a specific provider object identifier, or not may depend on whether a provider obj ect is in an NDC or EDIFACT format. For example, when a provider object comprises an NDC offer, the provider object identifier data may comprise an identifier generated by the provider system 102 which specifically identifies the NDC offer. However, when a provider object comprises an Edifact recommendation, which generally does not include a specific identifier, the Edifact recommendation may be identified by the provider system 102 based on provider object identifier data such as characteristics of the Edifact recommendation such as a specific order and/or format of data of the Edifact recommendation.

In general, communication between the client device 104 and the intermediation server 108 occurs via a computing-process flow 110 implemented at least by the intermediation server 108, and, as will be described in more detail herein, such communications may occur via an interaction environment.

For example, during ordering of a provider object (e.g., booking a flight in an interaction environment), communications between the client device 104 and the intermediation server 108 may occur via an interaction environment such that data of the computing-process flow 110 is at least partially exchanged in the interaction environment.

Furthermore, when the intermediation server 108 receives a communication from the client device 104, as described herein, the intermediation server 108 is generally configured to understand and/or determine which step of the computing-process flow 110 is being implemented to generate the communication.

As such, as will be described herein, the intermediation server 108 may implement a chat manager engine 114 and an interface adapter engine 116.

As used herein, the term "engine" refers to hardware (e.g., a processor, such as a central processing unit (CPU), graphics processing unit (GPU), an integrated circuit or other circuitry) or a combination of hardware and software (e.g., programming such as machine- or processor-executable instructions, commands, or code such as firmware, a device driver, programming, object code, etc. as stored on hardware). Hardware includes a hardware element with no software elements such as an application specific integrated circuit (ASIC), a Field Programmable Gate Array (FPGA), a PAL (programmable array logic), a PLA (programmable logic array), a PLD (programmable logic device), etc. A combination of hardware and software includes software hosted at hardware (e.g., a software module that is stored at a processor-readable memory such as random access memory (RAM), a hard-disk or solid-state drive, resistive memory, or optical media such as a digital versatile disc (DVD), and/or implemented or interpreted by a processor), or hardware and software hosted at hardware.

For example, as depicted the system 100 further comprises an interaction environment engine 118 which may implement an interaction environment 120, which may include, but is not limited to, an immersive environment, a metaverse environment, a virtual reality environment, an alternative reality environment, a web-based chat environment, and the like. Hereafter, the term "immersive environment" is used to refer to any suitable combination of metaverse environments, virtual reality environment, alternative reality environments, and the like.

Indeed, the interaction environment engine 118 and the interaction environment 120 may be based on any present or future electronic media servers that publish and/or provide content for the client device 104 including, but not limited to, web pages, social media, audio, video, movies, television, games, books, news, search results, ecommerce content, and the like, for example in web page format, an immersive environment format and/or any other suitable format. The interaction environment engine 118 may comprise a publisher platform that publishes content, and the like, and may comprise any suitable combination of any suitable number of servers, cloud computing platforms, and the like.

Furthermore, the client device 104 and the intermediation server 108 may establish respective communication links to the interaction environment engine 118 and may interact via such communication links. For example, communication links between components of the system 100 are depicted in FIG. 1, and throughout the present specification, as double-ended arrows between respective components; the communication links may include any suitable combination of wireless and/or wired links and/or wireless and/or wired communication networks including, but not limited to, the network 106.

In particular, when the interaction environment 120 comprises an immersive environment, the client device 104 may interact with the intermediation server 108 within the interaction environment 120 via an avatar controlled by a user of the client device 104. Similarly, when the interaction environment 120 comprises an immersive environment, the intermediation server 108 may interact with the client device 104 within the interaction environment 120 via an electronic non-player character controlled by the chat manager engine 114, and/or at least text and/or aural control of the electronic non-player character may occur via the chat manager engine 114, while other types of control of the electronic non-player character (e.g. control of visual aspects and/or movement of the electronic non-player character) may occur via another suitable engine. For example, the chat manager engine 114 may receive, as input, requests (e.g. as text, and/or aural requests converted to text) from the avatar controlled by the client device 104 and output responses (e.g. as text) that are provided to the avatar (e.g. as text and/or as converted to an aural response).

Furthermore, such interactions may occur when implementing the computing-process flow 110, in order to complete the computing-process flow 110.

In some instances, a communication link between the interaction environment engine 118 and a human-operated terminal 122 (interchangeably referred to hereafter, for simplicity, as the terminal 122) may be established for example to participate in the interactions between the client device 104 and the intermediation server 108 in the interaction environment 120, to assist with completing the computing-process flow 110. However, in order not to waste bandwidth and/or processing resources in the system 100, such communication links are generally minimized within the system 100, as described herein.

Furthermore, the terminal 122 may not have adequate processing resources available to adequately participate in the interactions between the client device 104 and the intermediation server 108 to assist with completing the computing-process flow 110. As such, the intermediation server 108 may assist the human operated terminal with such interactions via the interface adapter engine 116, as described herein.

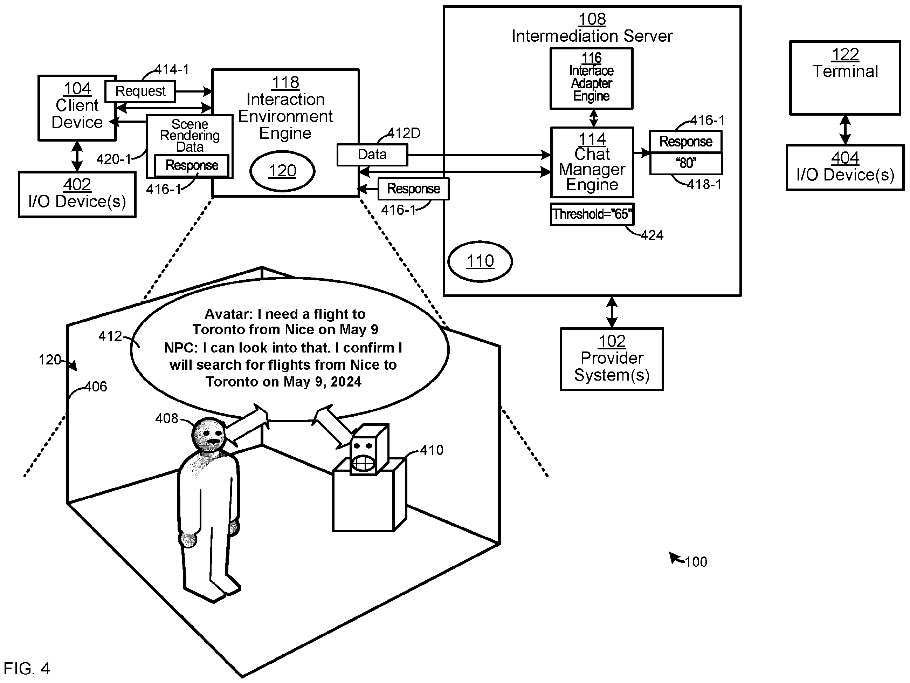

Functionality of the engines 114, 116 is described herein with respect to FIG. 4 to FIG. 13.

Furthermore, while only one terminal 122 is depicted, the terminal 122 may comprise a plurality of terminals 122, each operated by a respective human operator. Furthermore, such terminals 122 may be geographically distributed, and may be configured to assist with one electronic interaction in the interaction environment 120 at a time.

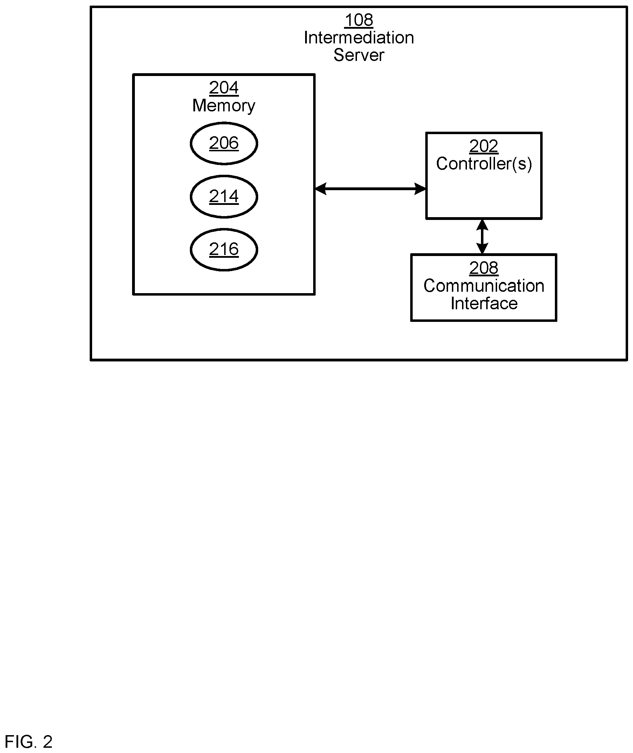

Turning to FIG. 2, before discussing the functionality of the system 100 in greater detail, certain components of the intermediation server 108 will be described. While depicted as one device, the intermediation server 108 may comprise one or more computing devices and/or one or more cloud computing devices that may be geographically distributed.

As shown in FIG. 2, the intermediation server 108 includes at least one controller 202, such as a central processing unit (CPU) or the like. The controller 202 is interconnected with a memory 204 storing an application 206, the memory 204 implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

The controller 202 is also interconnected with a communication interface 208, which enables the intermediation server 108 to communicate with the other computing devices of the system 100 via the network 106, though it is understood such communication may occur locally when components of the system 100 are combined. The communication interface 208 therefore may include any necessary components (e.g., network interface controllers (NICs), radio units, and the like) to communicate via the network 106. The specific components of the communication interface 208 may be selected based on upon the nature of the network 106 and/or local communication between components of the system 100, and the like. The intermediation server 108 may also include input and output devices connected to the controller 202, such as keyboards, mice, displays, and the like (not shown).

The components of the intermediation server 108 mentioned above may be deployed in a single enclosure, or in a distributed format. In some examples, therefore, the intermediation server 108 includes a plurality of processors, either sharing the memory 204 and communication interface 208, or each having distinct associated memories and communication interfaces. As such, it is understood that the memory 204, and/or a portion of the memory 204, may be internal (e.g., as depicted) or external to the intermediation server 108; regardless, the controller 202 is understood to have access to the memory 204.

The memory 204 also stores a plurality of computer-readable programming instructions, executable by the controller 202, in the form of various applications, including the application 206. As depicted, the memory 204 may store further applications 214, 216 which may respectively correspond to instructions for implementing the engines 114, 116. While the applications 214, 216 are depicted as separate from the application 206, in some examples the applications 206, 214, 216 may be combined in any suitable manner.

One or more of the applications 206, 214, 216 (e.g. and/or the application 206 and/or the engines 114, 116) may be implemented as one or more machine learning algorithms, which may include, but are not limited to: a deep-learning based algorithm; a neural network; a generalized linear regression algorithm; a random forest algorithm; a support vector machine algorithm; a gradient boosting regression algorithm; a decision tree algorithm; a generalized additive model; evolutionary programming algorithms; Bayesian inference algorithms, reinforcement learning algorithms, and the like. Any suitable machine learning algorithm and/or deep learning algorithm and/or neural network is within the scope of present examples.

However, at least the chat manager engine 114, may be implemented a combination of a predetermined script and one or more machine learning algorithms. For example, as will be described herein, when certain types of requests are received from the client device 104 within an electronic interaction in the interaction environment 120, such requests may be mapped to given text of a script, and such given text may be provided as a response by the chat manager engine 114. However, in other examples, responses provided by the chat manager engine 114 within an electronic interaction in the interaction environment 120 may be combinations of given text from a predetermined script and machine learning output generated from input from the electronic interaction in the interaction environment 120, as described herein. In yet further examples, responses provided by the chat manager engine 114 within an electronic interaction in the interaction environment 120 may be machine learning output generated from input from the electronic interaction in the interaction environment 120, as described herein

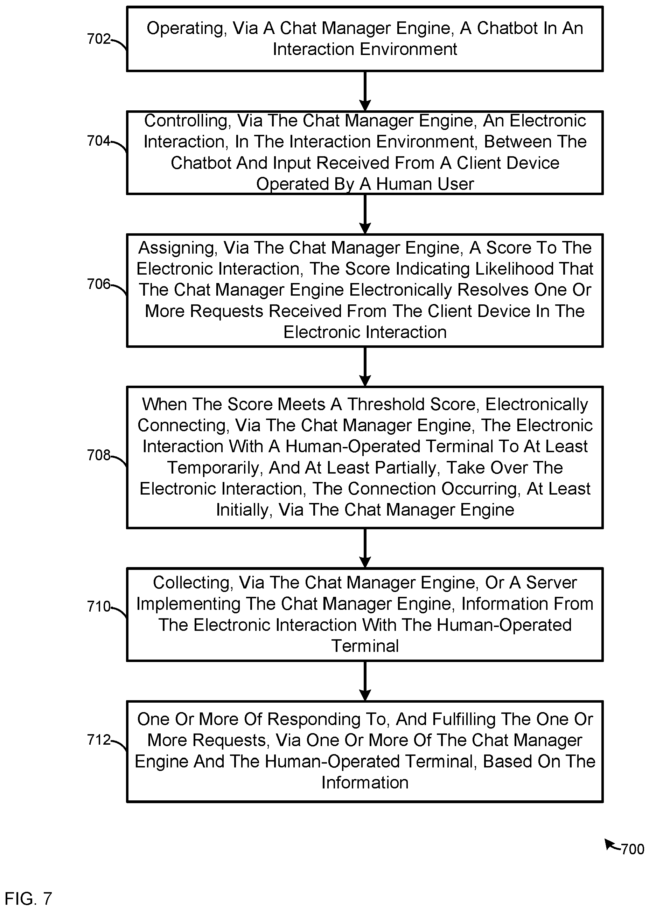

As will be understood by those skilled in the art, the controller 202 executes the instructions of the application 206 (and any other suitable applications 214, 216) in order to perform a set of operations defined by the instructions contained therein including, but not limited to, the blocks of a method described with respect to FIG. 7. In the description below, the controller 202, and more generally the intermediation server 108, and/or the engines 114, 116 are understood to be configured to perform those actions. It will be understood that they are so configured via the execution (by the controller 202) of the instructions of the applications 206, 214, 216 stored in the memory 204. Put another way, the intermediation server 108 may comprise a computer-readable storage medium (e.g., a non-transitory computer-readable storage medium, such as the memory 204) having stored thereon program instructions that, when executed by the controller 202, causes the controller 202 to perform a set of operations comprising the blocks of the method described with respect to FIG. 7.

While structure of the provider systems 102, the client device 104, the interaction environment engine 118, and the terminal 122 are not described in detail, the provider systems 102, the client device 104, the interaction environment engine 118, and the terminal 122 are understood to have a similar structure as the intermediation server 108, but adapted for respective functionality of the provider systems 102, the client device 104, the interaction environment engine 118, and the terminal 122.

For example, while each depicted as device, a provider system 102 and the interaction environment engine 118 may each comprise one or more computing servers, one or more computing devices, and/or one or more cloud computing devices that may be geographically distributed, and each of a provider system 102 and the interaction environment engine 118 is adapted for the functionality described herein.

Furthermore, the client device 104 and the terminal 122 may respectively comprise any suitable combination of input and output devices for interacting within the interaction environment 120. The client device 104 and the terminal 122 may include, but is not limited to, a respective headset, a respective virtual reality suit, a respective laptop computer, a respective desktop computer, a respective mobile phone, a respective tablet computer and any other device that may be used to receive content from the interaction environment engine 118, that complement the input and output hardware devices associated with the client device 104 and the terminal 122, for example to facilitate interactions in the interaction environment 120.

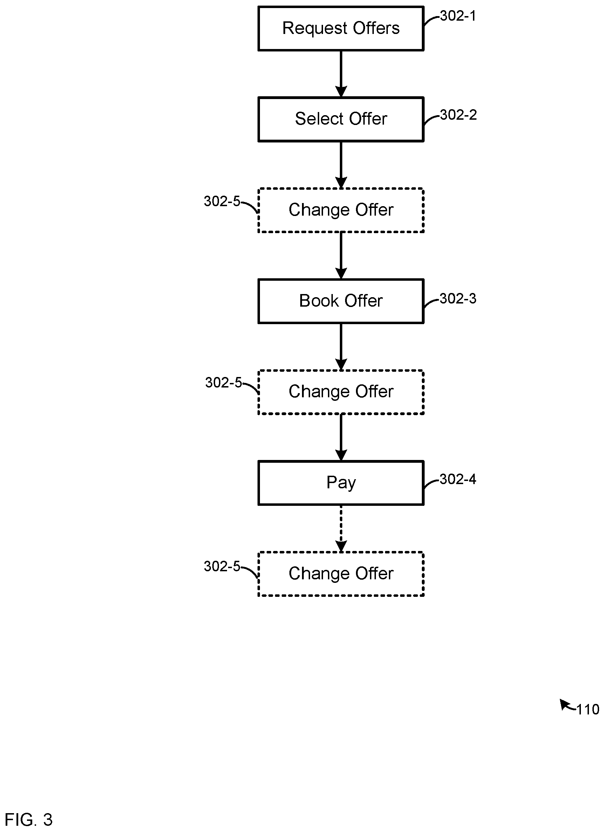

Attention is next directed to FIG. 3, which depicts a block diagram of an example of the computing-process flow 110. While the example computing-process flow 110 is depicted in the form of a flow chart, it is understood that the example computing-process flow 110 (e.g., hereafter the computing-process flow 110) may generally comprise steps 302-1, 302-2, 302-3, 302-4, and an optional one or more steps 302-5, that may be implemented in any suitable manner. The steps 302-1, 302-2, 302-3, 302-4, 302-5 are hereafter interchangeably referred to, collectively, as the steps 302 and, generically, as a step 302. This convention will be used throughout the present specification.

Furthermore, the term "steps" as used herein, may be understood to include steps of the computing-process flow 110 that are implemented at least via the intermediation server 108, for example according to a given standard. Furthermore, the chat manager engine 114 may implement at least a portion of the steps of the computing-process flow 110 and/or may assist with implementing the computing-process flow 110.

Continuing with a travel industry example, as depicted, the computing-process flow 110 may represent steps 302 for: requesting (e.g., the step 302-1) offers for flights (e.g., provider objects); selecting (e.g., the step 302-2) an offer of a flight (e.g., a provider object) to be booked; booking (e.g., the step 302-3) a selected offer of a flight (e.g., a provider object); and paying (e.g., the step 302-4) for the selected offer of a flight (e.g., a provider object) that is being booked.

At an optional change offer step 302-5 (e.g., with such optionality indicated by instances the steps 302-5 depicted in broken lines), the offer may be changed, and the optional change offer step 302-5 may be available at, and/or after, any of the select offer step 302-2, the book offer step 302-3, and the pay step 302-4.

Hence, in particular, each of the steps 302 may be implemented to book an offer of a flight (e.g., book a seat on a flight), in the depicted order (other than the change offer step 302-5 which may be implemented at and/or after any suitable step 302 of the computing-process flow 110). The computing-process flow 110 is understood to be completed once the pay step 302-4 is implemented.

For example, at the step 302-1, the client device 104 may interact with an electronic non-player character implemented by the chat manager engine 114, via an avatar controlled by a user of the client device 104, to provide criteria used for searching for offers of flights, such as a date for a flight, a departure airport, an arrival airport, among other possibilities flight to book; the criteria may be provided to the intermediation server 108 (e.g. via the chat manager engine 114), and to the provider systems 102, which may return respective offers of flights that meet the criteria. Such offers may be provided to the client device 104 via the electronic non-player character, implemented by the chat manager engine 114, interacting with the avatar controlled by the user of the client device 104.

Similarly, at the step 302-2, the client device 104 may interact with the electronic non-player character implemented by the chat manager engine 114, via the avatar controlled by a user of the client device 104, to select a flight to book, and the intermediation server 108 may receive such a selection. The client device 104 may further interact with the electronic non-player character implemented by the chat manager engine 114, via the avatar controlled by the user of the client device 104, to the like to add a service to an offer, such as a pickup service, and/or change criteria for searching for an offer (e.g. at the step 302-5).

Similarly, at the step 302-3, the client device 104 may interact with the electronic non-player character implemented by the chat manager engine 114, via the avatar controlled by the user of the client device 104, to select a flight to book (and/or to add a service to a booking, such as a pickup service, and the like, at the step 302-5), and the intermediation server 108 may receive such a selection of the flight to book (and/or of the service to add to a booking).

Similarly, at the step 302-4, the client device 104 may interact with the electronic non-player character implemented by the chat manager engine 114, via the avatar controlled by the user of the client device 104, to pay for the offer and/or any services, and the like, added to offer. Such payment may occur via transfer of payment information from the client device 104 to the chat manager engine 114. Such payment may occur via the intermediation server 108. Alternatively, such payment may occur via third party payment services, and the like.

At a step 302-5, any suitable information of a selected flight, and/or any services, and the like, added to offer may be changed, for example. Again, such change of the information may occur by way of the client device 104 interacting with the electronic non-player character implemented by the chat manager engine 114, via the avatar controlled by the user of the client device 104, and the intermediation server 108 implementing the change.

Furthermore, such information that may be changed may depend at which step 302 the step 302-5 is being implemented (e.g., and/or after at which step 302 the step 302-5 is being implemented). For example, before and after a flight is booked and paid for, an airline may have restrictions on what can be changed in the booking.

Hence, in general, a user of the client device 104 may "chat" with the chat manager engine 114 by way of controlling an avatar in the interaction environment 120 to "talk" to the electronic non-player character implemented by the chat manager engine 114 to provide criteria for searching for offers for provider object, receive offers of provider objects that meet the criteria, select offers, change the criteria and/or add to the criteria and/or change the offer and/or add to the offer, book the offer, and pay for the offer.

Put another way, the chat manager engine 114 is understood to receive one or more requests from the client device 104 (e.g. operated by a human user), and the chat manager engine 114 attempts to electronically resolve the one or more requests. For example, electronically resolving a request may include, but is not limited to, completing an implementation of the computing-process flow 110.

However, in many instances, the chat manager engine 114 may not be able to electronically resolve the one or more requests, which may necessitate another communication link in the system 100, for example between the terminal 122 and the intermediation server 108, such that the terminal 122 may intervene in the electronic interactions that occur between the client device 104 and the chat manager engine 114 in the interaction environment 120, for example on behalf of the chat manager engine 114, to assist with resolving the one or more requests. However, such an additional communication link to the terminal 122 generally uses bandwidth and processing resources in the system 100, and adding the additional communication link should generally occur only under certain conditions, as described herein.

Attention is now directed to FIG. 4, FIG. 5 and FIG. 6 which depicts aspects of one example of the system 100 that includes one or more provider systems 102 (for simplicity interchangeably referred to hereafter as the provider system 102), a client device 104, the intermediation server 108, the interaction environment engine 118, and the terminal 122. While the network 106 is not depicted, it is nonetheless understood to be present.

For clarity, it is understood that reference will be made hereafter to:
- An avatar (e.g. an avatar 408) controlled by a user of the client device 104;
   An electronic non-player character (NPC) that refers to a visual representation of an automated chatbot (e.g. a chatbot 410) that is not operated by a user of any device of the system 100; and
- A player avatar (e.g. an avatar 808) at least partially controlled by a user of the terminal 122.

The intermediation server 108 is in communication with the interaction environment 120, and the provider system 102, via respective communication links. The intermediation server 108 is further in communication with the client device 104, however via the interaction environment engine 118, via respective communication links. In particular, at least initially, the intermediation server 108 communicates with the interaction environment engine 118, and the client device 104, via the chat manager engine 114, for example via a communication link. Initially there may be no communication link between the intermediation server 108 and the terminal 122 (though the terminal 122 may be in communication with the network 106).

Similarly, the client device 104 is in communication with the interaction environment engine 118, via a respective communication link. Indeed, the client device 104 is further understood to be in communication with the intermediation server 108 via the interaction environment engine 118.

Furthermore, as depicted, the client device 104 is in communication with one or more input/output (e.g. I/O) devices 402, which may include, but is not limited to, virtual or augmented reality gear complementary to immersive environments (e.g., virtual reality and/or augmented reality and/or metaverse environments), for example used when the interaction environment 120 comprises such an immersive environment. However, the one or more I/O devices 402 may comprise any suitable combination of input and output devices, including, but not limited to, one or more of a keyboard, a pointing device, a touch screen, an immersive environment input device, a voice recognition device, a microphone a speaker, a display screen, an immersive environment output device, and the like. Indeed, the one or more I/O devices 402 may include any suitable combination of devices for controlling an avatar, and the like, in the interaction environment.

As depicted, the terminal 122 is also in communication with one or more input/output (e.g. I/O) devices 404 which may be similar, but not identical to, the I/O devices 402. In some examples, the I/O devices 402 of the client device 104 may comprise immersive environment gear, whereas the I/O devices 404 of the terminal 122 may comprise more conventional devices, such as a combination of a display screen and one or more input devices (e.g. a keyboard, a pointing device, and the like).

Also depicted in FIG. 4 is an example of the interaction environment 120 that is understood to be implemented by the interaction environment engine 118, as indicated by the depicted interaction environment 120 being between broken lines extending from the interaction environment engine 118.

As depicted, the interaction environment 120 comprises an immersive environment that includes an electronic room 406 (e.g. an electronic shop and/or an electronic location within the immersive environment), interchangeably referred to hereafter as the room 406. Returning to a travel-related example, the room 406 may be a travel-related shop in the interaction environment 120, which avatars controlled by client devices may enter to inquire about, and purchase, travel-related provider objects, such as flights.

For example, as depicted, an avatar 408 controlled by a user of the client device 104 has entered the room 406 and is interacting with a chatbot 410, controlled by the chat manager engine 114. In particular, it is understood that the chatbot 410 may comprise an electronic non-player character (NPC), and the chatbot 410 is not controlled by a human. To emphasize such non-human control of the chatbot 410, the chatbot 410 is depicted as a robot, however, the chatbot 410 may have any suitable form within the interaction environment 120. Similarly, while the avatar 408 is depicted in human form, the avatar 408 may have any suitable form within the interaction environment 120.

Furthermore, as depicted, the avatar 408 and the chatbot 410 are interacting, as represented via an electronic interaction 412, which represents an exchange of information between the avatar 408 and the chatbot 410. As described herein, the electronic interaction 412 may be represented as data 412D (e.g. text data) which may be provided to the chat manager engine 114, as described herein. The intermediation server 108 may generally maintain an ongoing record of the data 412D as the electronic interaction 412 progresses, for example as a transcript, and the like.

In particular, the electronic interaction 412 represents textual and/or aural requests made by the avatar 408 and textual and/or aural responses by the chatbot 410. For example, as depicted, the avatar 408 is requesting information from the chatbot 410 for a flight from Nice (e.g. in France) to Toronto (e.g. in Canada) on May 9.

For example, as depicted, the client device 104 may provide a request 414-1 to the interaction environment engine 118, which may provide the request 414-1 in the electronic interaction 412. For example, as depicted a request 414-1 of "I need a flight to Nice from Toronto on May 9" is provided in the electronic interaction 412 by the avatar 408, and the request 414-1 is provided to the chat manager engine 114 at the intermediation server 108, for example within the data 412D. Put another way, a user of the client device 104 controls the avatar 408 to request to book a flight from Nice to Toronto on May 9, which may, at least initially, be understood by the chat manager engine 114 as being a request to book one ticket from Nice to Toronto on May 9.

In particular, the request 414-1 may occur in conjunction with step 302-1 of the computing-process flow 110, which may be concurrently implemented with the electronic interaction 412. Hence, when the intermediation server 108 receives the request 414-1 (e.g. in the data 412D), the intermediation server 108 and/or the chat manager engine 114 determines that an instance of the computing-process flow 110 has been initiated and the step 302-1 has occurred.

As depicted, the chat manager engine 114 receives the data 412D of the electronic interaction 412 (e.g. text and/or any aural data converted to text) as input, and outputs a response 416-1. In some examples, as has been previously described, the response 416-1 may be output of a machine learning algorithm of the chat manager engine 114, whereas in other examples, the response 416-1 may be output of from a predetermined script implemented by the chat manager engine 114. In yet further examples, the response 416-1 may be a combination of output from a machine learning algorithm and a predetermined script, as described herein. As depicted, the response 416-1 is provided to the interaction environment engine 118, and output (e.g. as text and/or an aural output) in the electronic interaction 412 for example as output from the chatbot 410. Hereafter, any output by the chat manager engine 114 is understood to comprise output generated from any suitable combination of a script and a machine learning algorithm.

For example, as depicted, the response 416-1 may comprise text and/or an aural response of "I can look into that. I confirm I will search for flights from Nice to Toronto on May 9, 2024". The text "I can look into that" may be output from a predetermined script (e.g. as a standard response to a question from the avatar 408, whereas the text "I confirm I will search for flights from Nice to Toronto on May 9, 2024" may be output from a machine learning algorithm that converts the data 412D (e.g. which is understood to include the request 414-1, and/or data therefrom) into a response.

As also depicted in FIG. 4, the chatbot 410 may provide the response 416-1 in the electronic interaction 412, which is provided to the client device 104, for example in scene rendering data 420-1 that enables the client device 104 to render a scene of the room 406, the avatar 408, the chatbot 410 and the electronic interaction 412 via the one or more I/O devices 402. The scene rendering data 420-1 may comprise any suitable combination of image data, video data and sound data that enables the one or more I/O devices 402 to render such a scene.

As also depicted in FIG. 4 the chat manager engine 114 further outputs a score 418-1 (e.g. as depicted "80") indicating likelihood that the chat manager engine 114 electronically resolves one or more requests received from the client device 104 in the electronic interaction 412 (e.g. to complete the computing-process flow 110). For example, using a scale of "0" to "100", when the score 418-1 is high and/or closer to "100" the likelihood of the chat manager engine 114 electronically resolving one or more requests received from the client device 104 is understood to be high. However, when the score 418-1 is low and/or closer to "0" the likelihood of the chat manager engine 114 electronically resolving one or more requests received from the client device 104 is understood to be low. As the electronic interaction 412 continues, such a score may increase or decrease as described herein. As the score 418-1 is described herein as being updated, the score 418-1 (and updated scores) are interchangeably referred to hereafter as the score 418.

Indeed, when the chat manager engine 114 comprises a machine learning algorithm, the machine learning algorithm may be taught to generate responses on the basis of data from electronic interactions, and/or other data, such as offers from provider systems 102 that may correspond to requests from client devices 104. A score 418, as described herein, may comprise a machine learning score of a response. However, the score 418 may comprise any suitable score; indeed, the chat manager engine 114 may be configured to output such a score 418 on the basis of the data 412D, which may be different from a machine learning score of a response.

The training of a machine learning algorithm of the chat manager engine 114 to provide a score 418 as described herein may be based on factors such as whether or not an offer, or responses provided by the chatbot 410 (e.g. which may be represented in the data 412D) in an electronic interaction that corresponds to an offer, matches data of one or more requests from an avatar. In such examples, the better a match, a higher a score 418 and the poorer a match, the lower a score 418. Put another way, it may be heuristically determined, for example from historical electronic interactions (e.g. similar to the electronic interaction 412) that the better a match, the higher the likelihood of the chat manager engine 114 resolving one or more requests received from a client device in an electronic interaction (e.g. the higher the likelihood of completing the computing-process flow 110), and the poorer a match, the lower the likelihood of the chat manager engine 114 resolving one or more requests received from a client device in an electronic interaction (e.g. the lower the likelihood of completing the computing-process flow 110).

However the training of a machine learning algorithm may be based on other factors, such as a defined value of an offer and/or a defined value associated with one or more requests. In such examples, the higher a defined value, the lower a score 418, and the lower a defined value, the higher a score 418. Put another way, it may be heuristically determined, for example from historical electronic interactions (e.g. similar to the electronic interaction 412) that the higher a defined value of an offer, the lower the likelihood of the chat manager engine 114 resolving one or more requests received from a client device in an electronic interaction (e.g. the lower the likelihood of completing the computing-process flow 110), and the lower a defined value of an offer, the higher the likelihood of the chat manager engine 114 resolving one or more requests received from a client device in an electronic interaction (e.g. the higher the likelihood of completing the computing-process flow 110).

However the training of a machine learning algorithm may be based on yet further factors, such as a complexity of one or more requests, which may be indicated by a number of items and/or provider objects requested in a request. In such examples, the higher a number of items and/or provider objects requested in a request, the lower a score 418, and the lower a number of items and/or provider objects requested in a request, the higher a score 418. Put another way, it may be heuristically determined, for example from historical electronic interactions (e.g. similar to the electronic interaction 412) that the higher a number of items and/or provider objects requested in a request, the lower the likelihood of the chat manager engine 114 resolving one or more requests received from a client device in an electronic interaction (e.g. the lower the likelihood of completing the computing-process flow 110), and the lower a number of items and/or provider objects requested in a request, the higher the likelihood of the chat manager engine 114 resolving one or more requests received from a client device in an electronic interaction (e.g. the higher the likelihood of completing the computing-process flow 110).

However, complexity may also be based on certain types of modifiers in a request, such as a requested item and/or provider object being associated with conditions, such as a person for whom the item and/or provider object is being requested being in a wheelchair, and/or being a minor (e.g. an unaccompanied minor), and/or as a person for whom the item and/or provider object is being requested traveling with a pet, etc. For example, the higher the number of modifiers, the lower the score 418, and the lower the number of modifiers, the higher the score 418. Put another way, it may be heuristically determined, for example from historical electronic interactions (e.g. similar to the electronic interaction 412) that the higher a number of modifiers for persons indicated in a request, the lower the likelihood of the chat manager engine 114 resolving one or more requests received from a client device in an electronic interaction (e.g. the lower the likelihood of completing the computing-process flow 110), and the higher a number of modifiers for persons indicated in a request, the higher the likelihood of the chat manager engine 114 resolving one or more requests received from a client device in an electronic interaction (e.g. the higher the likelihood of completing the computing-process flow 110).

However the training of a machine learning algorithm may be based on yet further factors, keywords and/or phrases in one or more requests from a client device (e.g. such as the requests 414 from the client device 104), which may be indicate whether, or not, a user of a client device has a high or low intent of booking and paying for an item and/or a provider object. For example, a first set of keywords and/or phrases such as, "important", "have to get this done", and the like, may indicate a lower likelihood of the chat manager engine 114 resolving one or more requests received from a client device in an electronic interaction (e.g. it may be heuristically determined that the more serious a user of a client device is about booking and paying for an item and/or a provider object, as indicated by the first set of keywords and/or phrases, the lower the likelihood that the chat manager engine 114 may complete the computing-process flow 110).

Conversely, a second set of keywords and/or phrases such as, "not too important" and "hoping to do this today", may indicate a higher likelihood of the chat manager engine 114 resolving one or more requests received from a client device in an electronic interaction (e.g. it may be heuristically determined that the less serious a user of a client device is about booking and paying for an item and/or a provider object, as indicated by the second set of keywords and/or phrases, the higher the likelihood that the chat manager engine 114 may complete the computing-process flow 110). Hence, the score 418 may be lowered or raised accordingly based on such keywords and/or phrases.

In yet further examples, other factors may indicate higher or lower likelihoods of the chat manager engine 114 resolving one or more requests received from a client device in an electronic interaction. For example, historical data of past electronic interactions (that may be stored in a database and/or memory accessible to the intermediation server 108, or any other computing device 102 that performs training of a machine learning algorithm of the chat manager engine 114) may indicate that factors such as a date and/or time of an electronic interaction may indicate a higher or lower likelihood of the chat manager engine 114 resolving one or more requests received from a client device in the electronic interaction.

For example, electronic interactions that occur in the late afternoon (e.g. between 3pm and 5pm) may indicate a lower likelihood of the chat manager engine 114 resolving one or more requests received from a client device in an electronic interaction, whereas electronic interactions that occur in the morning (e.g. between 8am and 11am) may indicate a higher likelihood of the chat manager engine 114 resolving one or more requests received from a client device in an electronic interaction.

Similarly, electronic interactions that occur in some months (e.g. May or June) may indicate a lower likelihood of the chat manager engine 114 resolving one or more requests received from a client device in an electronic interaction, whereas electronic interactions that occur in other months (e.g. January or February) may indicate a higher likelihood of the chat manager engine 114 resolving one or more requests received from a client device in an electronic interaction.

Similarly, electronic interactions that occur a first given time period, such as 360 days or more, prior to a requested date of a flight, and the like, may indicate a lower likelihood of the chat manager engine 114 resolving one or more requests received from a client device in an electronic interaction, whereas electronic interactions that occur a second given time period (e.g. shorter than the first given time period), such as 30 days or more, prior to a requested date of a flight, and the like, may indicate a higher likelihood of the chat manager engine 114 resolving one or more requests received from a client device in an electronic interaction.

Similarly, the historical data may be particular to a user associated with a current electronic interaction, and such historical data may indicate higher or lower likelihoods of the chat manager engine 114 resolving one or more requests received from a client device in an electronic interaction with the user. For example, the user may have a history of making requests, but never (or rarely) booking, or the user may have a history of making requests, but almost always booking.

As will also be described herein, the score 418-1 may be compared to a threshold score 424, which, as depicted is "65". When the score 418-1 is above the threshold score 424, the intermediation server 108 and/or the chat manager engine 114 may determine that the chat manager engine 114 has a good likelihood of electronically resolving one or more requests received from the client device in the electronic interaction 412. Hence, as the score 418-1 of "80" is above the threshold score 424 of"65", the intermediation server 108 and/or the chat manager engine 114 may determine that the chat manager engine 114 has a good likelihood of electronically resolving one or more requests received from the client device in the electronic interaction 412.

Conversely, when the score 418-1 is at or below the threshold score 424, the intermediation server 108 and/or the chat manager engine 114 may determine that the chat manager engine 114 has a poor likelihood of electronically resolving one or more requests received from the client device in the electronic interaction 412.

The threshold score 424 may be any suitable value, such as 65, 70, 75, and the like (e.g. on a scale of 0 to 100), amongst other possibilities. Furthermore, the threshold score 424 may be determined heuristically and provisioned at the intermediation server 108.

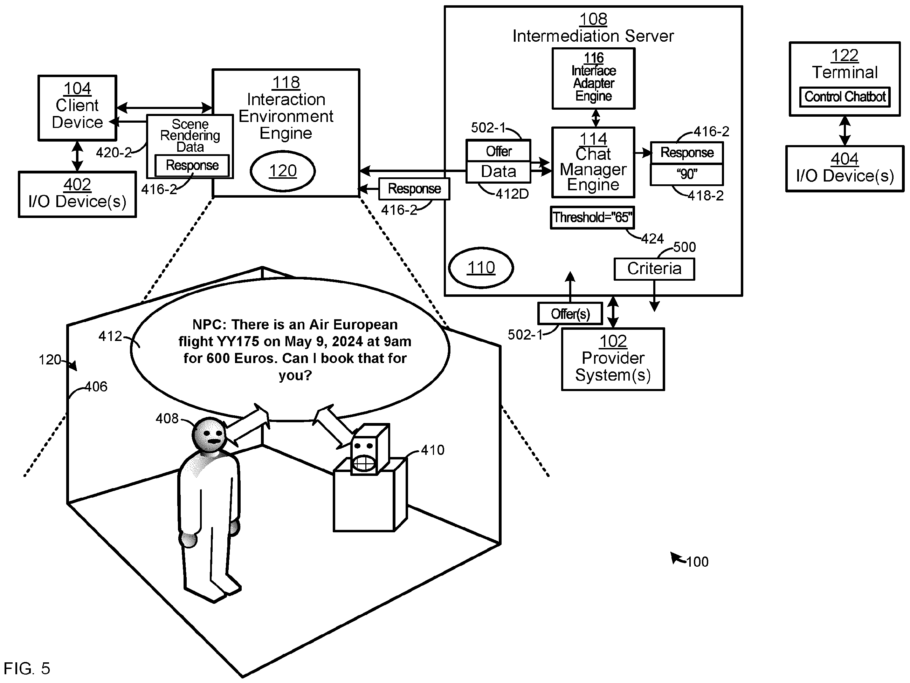

Attention is next directed to FIG. 5, which is understood to follow from FIG. 4. As depicted in FIG. 5, the intermediation server 108, and/or the chat manager engine 114, may parse the data 412D from the electronic interaction 412 that represents the request 414-1 into criteria 500 and/or extracts the criteria 500 from the data 412D from the electronic interaction 412.

The criteria 500 may be provided to one or more provider systems 102 to search for one or more flights that meet the criteria from the request 414-1. For example, the criteria 500 may be in a format particular to a provider system 102, and may comprise a request for flights from Nice to Toronto on May 9, 2024 (e.g. it is assumed in the example, that the intermediation server 108, and/or the chat manager engine 114 assumes that that a date provided in the electronic interaction 412 without a year is a next possible date in time; as such, it is understood that the electronic interaction 412 is occurring after May 9, 2023 and before May 9, 2024).

As depicted, a provider system 102 returns at least one offer 502-1 (e.g. offers 502 and/or an offer 502) for a provider object that meets the criteria 500, for example a flight from Nice to Toronto on May 9, 2024 on Air European (e.g. flight YY175) for 600 Euros. While only one offer 502-1 is described, it is understood that any suitable number of offers 502-1 may be received.

As depicted, the offer 502-1 may be input to the chat manager engine 114 with the data from the electronic interaction 412, and the chat manager engine 114 again generates a response 416-2, and a score 418-2. The responses 416-1, 416-2 will be interchangeably referred to hereafter, collectively, as the responses 416 and, generically, as a response 416.

As depicted, the response 416-2 may comprise "There is an Air European flight YY175 on May 9, 2024 at 9am for 600 Euros. Can I book that for you?", which is provided in the electronic interaction 412 and to the client device 104 as updated scene rendering data 420-2 (e.g. the scene rendering data 420-1, 420-2 interchangeably referred to hereafter as the scene rendering data 420 and/or as a set of scene rendering data 420).

In particular, the response 416-2 may occur in conjunction with step 302-2 of the computing-process flow 110, which may be concurrently implemented with the electronic interaction 412. The electronic interaction 412 as depicted in FIG. 5 further represents the chat manager engine 114 attempting to move the computing-process flow 110 to the step 302-3 of the computing-process flow 110 (e.g. to book a provider object).

The score 418-2 may represent whether the response 416-2 and/or the offer 502-1 accurately responds to the initial request 414-1 and hence an updated likelihood that the chat manager engine 114 electronically resolves one or more requests received from the client device 104 in the electronic interaction 412.

As depicted, the score 418-2 has increased from "80" to "90" (e.g. as compared to the score 418-1) and remains above the threshold score 424.

For example, the score 418-2 may represent accuracy of data in the offer 502-1 as compared to the initial request 414-1. As the offer 502-1 may generally accurately represent an offer of a provider object that matches data in the request 414-1, the score 418-2 may have increased.

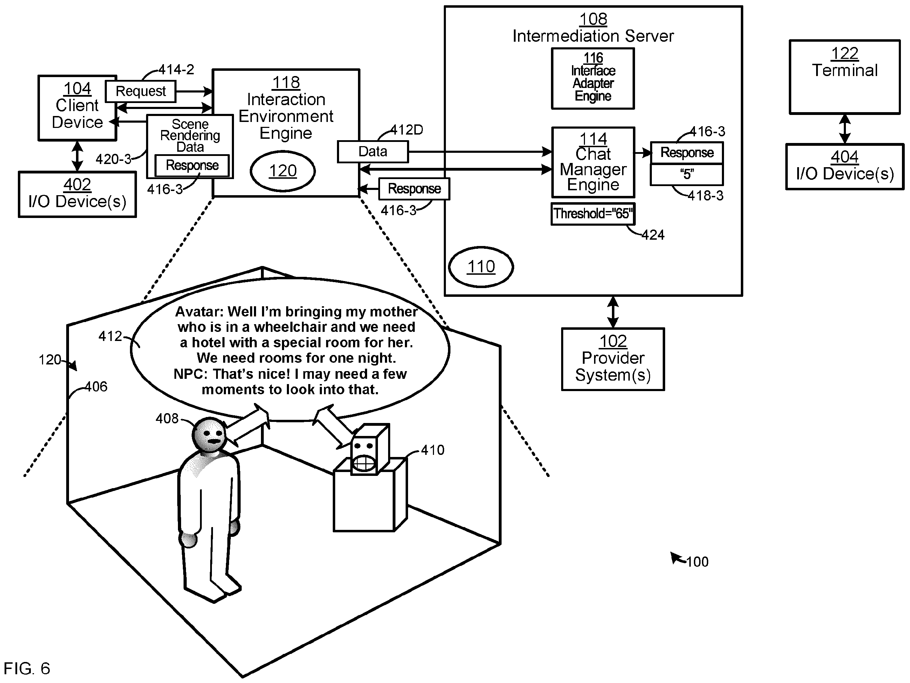

However, attention is next directed to FIG. 6, which is understood to follow in time from FIG. 5. In particular, the client device 104 provides a further request 414-2 (e.g. the requests 414-1, 414-2 interchangeably referred to hereafter as the requests 414 and/or a request 414), for example to update the initial request 414-1.

In particular the further request 414-2 indicates that the user of the client device 104, after reviewing the response 416-3, is asking to book not just one ticket from Nice to Toronto, but also needs to book a ticket for their mother and also a hotel for their mother who uses a wheelchair. For example, the further request 414-2 comprises "Well I'm bringing my mother who is in a wheelchair and we need a hotel with a special room for her. We need rooms for one night.", which is provided in the electronic interaction 412.

In particular, the further request 414-2 may occur in conjunction with step 302-5 of the computing-process flow 110, which may be concurrently implemented with the electronic interaction 412.

The updated data 412D of the electronic interaction 412, including the request 414-2, is provided to the chat manager engine 114, which outputs a response 416-3 of "That's nice! I may need a few moments to look into that", along with an updated score 418-3 of "5", which is well below the threshold score 424 of "65".

In particular, the score 418-3 indicates that the likelihood that the chat manager engine 114 electronically resolving one or more requests 414 received from the client device 104 in the electronic interaction 412 has decreased. In particular, due to complexity of the updated request 414-2, the chat manager engine 114 may not be able to accurately generate criteria for performing a search of the provider systems 102 for the items mentioned in the electronic interaction 412.

For example, the electronic interaction 412 now indicates that a search of the provider systems 102 is to be performed for two tickets from Nice to Toronto on May 9, 2024, one of the tickets being for a person in a wheelchair (and hence may also indicate that both tickets need to be for adjacent seats, only one needing to be for a person in a wheelchair), as well as two hotel rooms for one night, with one of the hotel rooms being adapted for persons in wheelchairs, and possibly on a same floor.

Put another way, the complexity of the requests 414 may be beyond the ability of the chat manager engine 114 to convert to criteria for searching the provider systems 102 for corresponding provider objects, for example due to a number of items and/or provider objects being requested, and the score 418-3 of "5" hence indicates that the likelihood that the chat manager engine 114 has a low likelihood of electronically resolving the one or more requests 414 received from the client device 104 in the electronic interaction 412.

Hence, it is now understood that the score 418 may increase or decrease as requests 414 are received.

In some examples, a score 418 may be based on a comparison between a request (e.g. the request 414-1) and a resulting response and/or offer (e.g. the response 416-2 and/or the offer 502-1). For example, when the request 414-1 is for a flight from Toronto to Nice, but the response 416-2 and/or the offer 502-1 is for a train ride from Boston to New York, the score 418 may be lowered, as the response 416-2 and/or the offer 502-1 does not match the request 414-1. Indeed, further requests 414 from the client device 104 may also indicate that a response 416 and/or an offer 502 do not match the initial request. Indeed, the chat manager engine 114 may be further configured to perform such a comparison, or as the chat manager engine 114 is generating the responses 416, the intermediation server 108 may operate a comparison engine (not depicted), and the like, to perform such comparisons and update the score 418 accordingly.

Regardless of how the score 418 is lowered, while a number of communication links in the example of FIG. 4, FIG. 5 and FIG. 6 is minimized, changes in the score 418 and/or a value of the score 418 may indicate that at least another communication link may be justified.

Attention is now directed to FIG. 7 which depicts a flowchart representative of a method 700 a method for efficiently establishing communication links in interaction environments when intermediating between devices. The operations of the method 700 of FIG. 7 correspond to machine readable instructions that are executed by the intermediation server 108, and specifically the controller 202 of the intermediation server 108. In the illustrated example, the instructions represented by the blocks of FIG. 7 are stored at the memory 204 for example, as the applications 206, 214, 216. The method 700 of FIG. 7 is one way in which the system 100 and/or the intermediation server 108 and/or the engines 114, 116 and/or the controller 202 may be configured. Furthermore, the following discussion of the method 700 of FIG. 7 will lead to a further understanding of the system 100, and its various components.

The method 700 of FIG. 7 need not be performed in the exact sequence as shown and likewise various blocks may be performed in parallel rather than in sequence. Accordingly, the elements of method 700 are referred to herein as "blocks" rather than "steps." The method 700 of FIG. 7 may be implemented on variations of the system 100 of FIG. 1 and FIG. 4, as well.

Furthermore, the method 700 of FIG. 7 will be described with respect to the example of the system 100 depicted in FIG. 4., FIG. 5 and FIG. 6.

At a block 702, the controller 202, and/or the intermediation server 108, operates, (e.g. via the chat manager engine 114), the chatbot 410 in the interaction environment 120.

An example of such operation is depicted in FIG. 4, FIG. 5 and FIG. 6.

At a block 704, the controller 202, and/or the intermediation server 108, controls, via the chat manager engine 114, the electronic interaction 412, in the interaction environment 120, between the chatbot 410 and input received from the client device 104 operated by a human user.

For example, it is understood that the requests 414 described herein are based on input received at the client device 104 via the I/O devices 402.

At a block 706, the controller 202, and/or the intermediation server 108, assigns, via the chat manager engine 114, a score 418 to the electronic interaction 412, the score 418 indicating likelihood that the chat manager engine 114 electronically resolves one or more requests 414 received from the client device 104 in the electronic interaction 412.

Examples of the score 418 are described with respect to FIG. 4, FIG. 5 and FIG. 6, and may be based on the data 412D input to the chat manager engine 114.

However, as has already been described, in some examples, the score 418 may be based on one or more of: a defined value associated with the one or more requests 414, the score 418 changing as the defined value changes; and a complexity of the one or more requests 414, the score 418 changing (e.g. decreasing) as the complexity increases as a number of items or provider objects associated with the one or more requests 414 increases, the provider objects representing goods or services offered by one or more provider systems 102.

For example, referring to FIG. 4, FIG. 5 and FIG. 6, initially a defined value of the one ticket was 600 Euros, however, as the number of items or provider objects increased, it is understood that the defined value associated with the associated with the one or more requests 414 also increased, may which cause a decrease in the score 418. Similarly, as the number of items or provider objects associated with the one or more requests 414 increased (e.g. from one ticket on a flight, to two tickets and two hotel rooms, one of tickets and one of the hotel rooms being for a person in a wheelchair), and hence the score 418 decreased.

Indeed, the blocks 702, 704, 706 are understood to be represented by FIG. 4, FIG. 5 and FIG. 6.

When the score 418 meets the threshold score 424 (e.g. is at or below the threshold score 424), at a block 708, the controller 202, and/or the intermediation server 108, electronically connects, via the chat manager engine 114, the electronic interaction 412 with a human-operated terminal 122 to at least temporarily, and at least partially, take over the electronic interaction 412, the connection occurring, at least initially, via the chat manager engine 114.

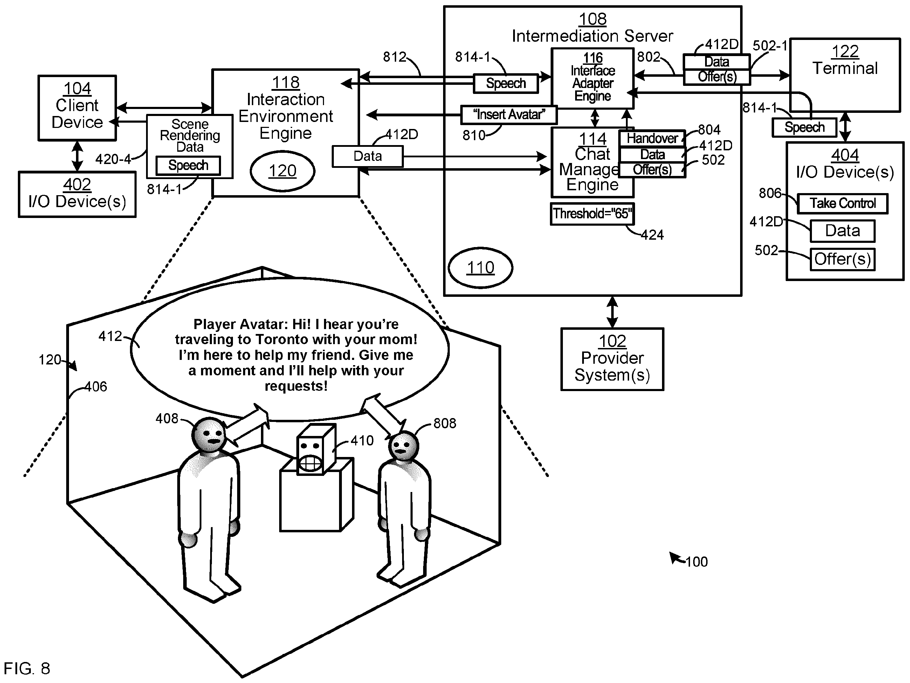

It is further understood that the electronically connecting of the block 708 includes, but is not limited to, setting up one or more communication links between the terminal 122 and the interaction environment engine 118, for example to connect the terminal 122 to the interaction environment 120. Examples of such a connection are described herein with respect to FIG. 8 to FIG. 11.

At a block 710, the controller 202, and/or the intermediation server 108, collects, via the chat manager engine 114 (or the intermediation server 108 itself), information from the electronic interaction 412 with the human-operated terminal 122. For example, when the terminal 122 at least temporarily, and at least partially, takes over the electronic interaction 412, the data 412D will continue to be collected by the chat manager engine 114 and/or the intermediation server 108.

Hence, at the block 708 and the block 710, server-side control of the electronic interaction 412 is transferred to the terminal 122, which may, for example, be used perform one or more searches of one or more provider systems 102 based on the requests 414. Indeed, the information collected from the electronic interaction 412 with the human-operated terminal 122 may comprise one or more offers for provider objects that meet criteria indicated in the requests 414.

At a block 712, the controller 202, and/or the intermediation server 108, one or more of responds to, and fulfills the one or more requests 414, via one or more of the chat manager engine 114 and the human-operated terminal 122, based on the information.

For example, once the terminal 122 has been operated to search for offers for provider objects that meet criteria indicated in the requests 414 (e.g. when implementing the computing-process flow 110), server-side control of the electronic interaction 412 may be transferred back to the chat manager engine 114, which may continue to interact with the client device 104 to complete the computing-process flow 110. In these examples, the communication link between the terminal 122 and the interaction environment engine 118, of the block 708 is disconnected.

Alternatively, or in addition, once the terminal 122 has been operated to search for offers for provider objects that meet criteria indicated in the requests 414 (e.g. when implementing the computing-process flow 110), the terminal 122 may be continued to be used to interact with the client device 104 to complete the computing-process flow 110. In these examples, the communication link between the terminal 122 and the interaction environment engine 118, of the block 708 may be disconnected after the computing-process flow 110 is completed.

The method 700 may include other features.

In some examples, operating the chatbot 410 in the interaction environment 120 (e.g. at the block 702) may occur while concurrently implementing the computing-process flow 110 for fulfilling the one or more requests 414. In such examples, one or more of collecting the information from the electronic interaction 412 with the human-operated terminal 122 (e.g. at the block 710), responding the one or more requests 414 (e.g. at the block 712), and fulfilling the one or more requests 414 (e.g. at the block 712) may occur in conjunction with implementing one or more steps of the computing-process flow 110 and/or in conjunction with completing the computing-process flow 110.

In some examples, the chatbot 410 may comprise an electronic non-player character (e.g. the NPC depicted herein) and the interaction environment 120 may comprise an immersive environment (e.g. as depicted here). In these examples, electronically connecting the electronic interaction 412 with the human-operated terminal 122 may comprise (e.g. at the block 708): adding into the immersive environment, a player avatar at least partially operated via the human-operated terminal 122. An example of such an addition of a player avatar is described herein with respect to FIG. 8, FIG. 9, FIG. 10 and FIG. 11.

Similarly, in some examples, the chatbot 410 may comprise an electronic non-player character and the interaction environment 120 may comprise an immersive environment, and electronically connecting the electronic interaction 412 with the human-operated terminal 122 may comprise (e.g. at the block 708): adding, via the interface adapter engine 116, into the immersive environment, a player avatar (e.g. a player avatar 808 described with reference to FIG. 8), the human-operated terminal 122 controlling speech or text of the player avatar; and transferring control of other operations of the player avatar to the interface adapter engine 116, the interface adapter engine 116 providing an interface between the interaction environment 120 and the human-operated terminal 122.

Put another way, a player avatar may represent a human operating the terminal 122, but to minimize the need for the human to operate the player avatar (e.g. a player avatar 808 described with reference to FIG. 8), the interface adapter engine 116 may operate the player avatar (e.g. control movement of the player avatar) while the human operating the terminal 122 may control only the speech or text of the player avatar.

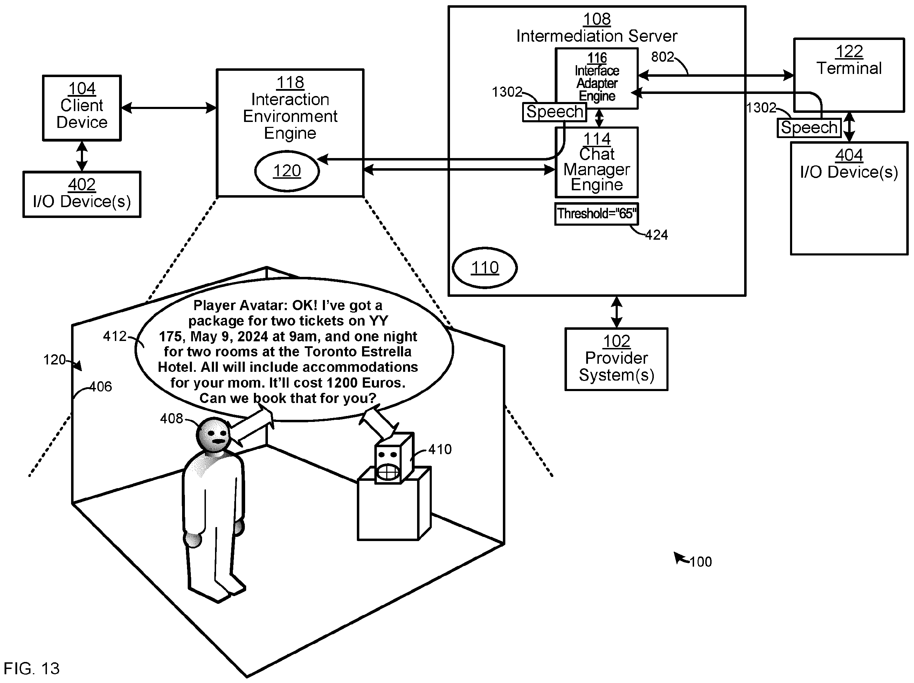

In yet further examples, the chatbot 410 may comprise an electronic non-player character and the interaction environment 120 may comprise an immersive environment, and electronically connecting the electronic interaction 412 with the human-operated terminal 122 may comprise (e.g. at the block 708): enabling, via the chat manager engine 114, the human-operated terminal 122 to control speech or text of the electronic non-player character, while the chat manager engine 114 maintains control over other operations of the electronic non-player character. Such an example is depicted in FIG. 13.

In yet further examples, electronically connecting the electronic interaction 412 with the human-operated terminal 122 may further occur via the interface adapter engine 116, and the method 700 may further comprise: adapting, via the interface adapter engine 116, data exchanged between the interaction environment 120 and the human-operated terminal 122 for the interaction environment 120 and the human-operated terminal 122. Such adapting by the interface adapter engine 116 may reduce the use or processing resources at the human-operated terminal 122.

For example, the interface adapter engine 116 may change frequencies and/or a language of a human operating the terminal 122 to adapt for frequencies and/or a language used within the interaction environment 120.

In a particular example, the chatbot 410 may be communicating with the avatar 408 in a first language, and a human operating the terminal 122 may not speak the first language, but may speak a second language different from the first language; in these examples, the interface adapter engine 116 may translate between the languages such that any text or speech provided by the human operating the terminal 122 is translated into a language understood by the user operating the client device 104, and vice versa.

In another particular example, the chatbot 410 may be communicating with the avatar 408 according to a given accent in a given language, and a human operating the terminal 122 may have a different accent; in these examples, the interface adapter engine 116 may change the voice of the human to be in the given accent, for example for continuity in communication with the avatar 408.

In another particular example, the chatbot 410 may be communicating with the avatar 408 according to a set of frequencies (e.g. the chatbot 410 may sound robotic); in these examples, the interface adapter engine 116 may change the voice of the human to be in the set of frequencies, for example for continuity in communication with the avatar 408 (e.g. the interface adapter engine 116 may change speech of the human operating the terminal 122 to also sound robotic and/or to sound the same as a voice of the chatbot 410).

In yet further examples, electronically connecting the electronic interaction 412 with the human-operated terminal 122 may further occur via the interface adapter engine 116, and the method 700 may further comprise: providing, via the interface adapter engine, at an output device of the human-operated terminal 122 a user interface component that, when actuated, causes the human-operated terminal 122 to at least temporarily, and at least partially, take over the electronic interaction 412; and, when actuation of the user interface component is received, electronically connecting, via the chat manager engine 114 and the interface adapter engine 116, the electronic interaction 412 with the human-operated terminal 122.

For example, at the block 708, when the score 418 meets the threshold score 424, a user interface component may be provided at an output device (e.g. the one or more I/O devices 404) of the terminal 122 for example to provide an electronic button that, when actuated causes a communication link between the terminal 122 and the interaction environment engine 118 to be established, for example via the engines 114, 116. An example of such a user interface component is described with respect to FIG. 8.

However, in other examples, electronically connecting the electronic interaction 412 with the human-operated terminal 122 may occur automatically, for example based on responses of the chat manager engine 114 and/or the chatbot 410, for example when the score 418 falls below the threshold score 424.

In yet further examples, one or more of responding to, and fulfilling the one or more requests 414 (e.g. at the block 712), via one or more of the chat manager engine 114 and the human-operated terminal 122, based on the information (e.g. collected at the block 710) may comprise: transferring full control of the electronic interaction 412 back to the chat manager engine 114 prior to fulfilling the one or more requests 414; and fulfilling the one or more requests 414 via the chat manager engine 114 based the information collected via the human-operated terminal 122.

For example, once the terminal 122 has been operated to search for offers for provider objects that meet criteria indicated in the requests 414 (e.g. when implementing the computing-process flow 110), server-side control of the electronic interaction 412 may be transferred back to the chat manager engine 114 and a communication link between the terminal 122 and the interaction environment engine 118 may be terminated, saving bandwidth in the system 100.

For example, another user interface component may be provided at an output device (e.g. the one or more I/O devices 404) of the terminal 122 for example to provide another electronic button that, when actuated causes a communication between the terminal 122 and the interaction environment engine 118 to end. Hence, the human operator of the terminal 122 may terminate the communication link between the terminal 122 and the interaction environment engine 118, and any information collected via the human-operated terminal 122 communicating in the electronic interaction 412 may be provided to the chat manager engine 114 to fulfill the one or more requests 414 via the chat manager engine 114 (e.g. to complete the step 302-4 of the computing-process flow 110).

However, in other examples, such a termination of the communication link between the terminal 122 and the interaction environment engine 118 may occur automatically.

In some examples, the chatbot 410 may comprise one of a web-based chatbot and an electronic non-player character, and the interaction environment 120 may correspondingly comprise one of a web-based chat environment and an immersive environment. For example, a web-based chatbot and a web-based chat environment may enable communication with the client device 104 via text only in a web-based environment that is simpler to implement than an immersive environment.

Attention is next directed to FIG. 8, FIG. 9, FIG. 10, FIG. 11, FIG. 12 and FIG. 13, which depict further aspects of the method 700. FIG. 8, FIG. 9, FIG. 10, FIG. 11, FIG. 12 and FIG. 13 are understood to be similar to FIG. 4, FIG. 5, and FIG. 6, with like components having like numbers.

Attention is next directed to FIG. 8, which is understood to follow from FIG. 6. In FIG. 8 it is understood that the intermediation server 108 has determined (e.g. at the block 708 of the method 700) that the score 418-3 has met the threshold score 424 (e.g. the score 418-3 is lower than the threshold score 424), and control of the electronic interaction 412 is to be transferred to the terminal 122.

For example, as depicted, the intermediation server 108 has established a communication link 802 with the terminal 122, electronically connecting the terminal 122 to the interface adapter engine 116. In particular, as depicted, the chat manager engine 114 connects to the interface adapter engine 116 to provide a handover command 804 to the interface adapter engine 116, which causes the interface adapter engine 116 to establish the communication link 802. The chat manager engine 114 may further provide the data 412D (e.g. in a current form) to the interface adapter engine 116, along with any previously received offers 502 (e.g. the offer 502-1) associated with the electronic interaction 412, which provides the data 412D (e.g. a script of the electronic interaction 412) and the offers 502 to the terminal 122. In instances where the data 412D is in a language different from a language associated with the terminal 122, the data 412D may be translated (e.g. by the interface adapter engine 116) into the language associated with the terminal 122.

As depicted, the data 412D and the offers 502 are provided at an output device of the I/O devices 404 of the terminal 122 (e.g. a display screen). As depicted, a take-control user interface component 806 is also depicted at the I/O device 404, which, when actuated (e.g. via an input device of the I/O devices 404), causes transfer of at least partial control the electronic interaction 412 from the chat manager engine 114 to the terminal 122.

While not depicted, a decline-control user interface component may also be provided at an output device of the I/O devices 404, which, when actuated, declines the transfer of at least partial control the electronic interaction 412. In such examples, the data 412D and the offers 502 may be provided to another terminal (not depicted) with a respective take-control user interface component, similar to the take-control user interface component 806. Put another way, transfer of at least partial control the electronic interaction 412 from the chat manager engine 114 to a terminal may occur in a round robin fashion and/or to available terminals in the system 100 (e.g. some terminals may be available while others may be engaged in other activities, such as other electronic interactions).

Presuming that the take-control user interface component 806 is actuated, a player avatar 808 is inserted into the interaction environment 120, for example via an "Insert Avatar" command 810 provided from the interface adapter engine 116 to the interaction environment engine 118 via another communication link 812 established between the interface adapter engine 116 and the interaction environment engine 118. The term "player avatar" is understood to refer to an avatar at least partially controlled by a human (e.g. a human operator of the terminal 122). For example, the avatar 408 may also be a player avatar.

While the player avatar 808 is depicted in human form, the player avatar 808 may be in any suitable form. Indeed, an appearance of the player avatar 808 may be customized for the avatar 408, for example by the interface adapter engine 116, for example to have a similar demographic appearance (e.g. when the avatar 408 appears male of a given age, the player avatar 808 may also appear to be male of the same given age). Hence, in addition to speech, the interface adapter engine 116 may adapt the appearance of the player avatar 808 based, for example, on an appearance and/or associated demographics, of the avatar 408.

As has been previously described, the interface adapter engine 116 may control actions of the player avatar 808 (e.g. the player avatar 808 may not just "appear" in the room 406, but may "walk" into the room 406 via a door (not depicted) and the like), and a human operator of the terminal 122 may speak into a microphone of the I/O devices 404 and/or type text into a keyboard of the I/O devices 404, to control text or speech of the player avatar 808. For example, as depicted, speech data 814-1 provided by the human operator of the terminal 122 is provided to the interface adapter engine 116, which provides the speech data 814-1 to the interaction environment engine 118. The interface adapter engine 116 may translate the speech data 814-1 into a language of the electronic interaction 814-1 and/or adjust frequencies, accents, and the like of the speech data 814-1.

The speech data 814-1 is provided in the interaction environment 120 (and may be converted to text). For example, as depicted, after reviewing the data 412D, a human operator of the terminal 122 may say "Hi! I hear you're traveling to Toronto with your mom! I'm here to help my friend. Give me a moment and I'll help with your requests!" and such speech data 814-1 may be provided to the client device 104 in updated scene rendering data 420-4, which is understood to include a rendering of the player avatar 808.

While not depicted, similar scene rendering data may also be provided to the terminal 122.

Also as depicted, the chat manager engine 114 (and/or the intermediation server 108) continues to collect (e.g. at the block 710 of the method 700) updated data 412D of the electronic interaction 412 (e.g. information associated with the electronic interaction 412 with the human-operated terminal 122).

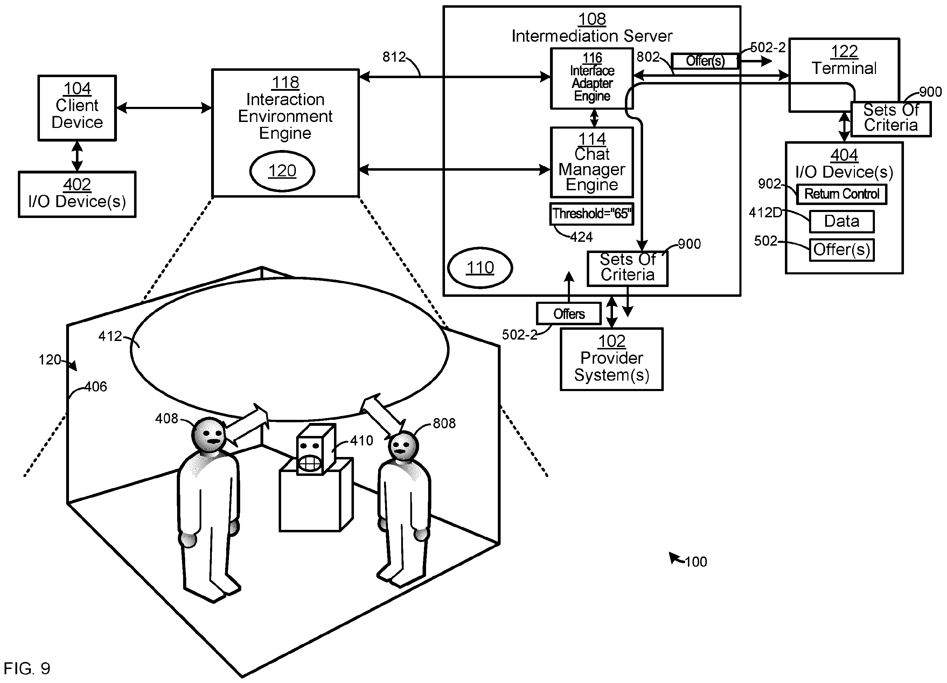

With attention next directed to FIG. 9, the human operator of the terminal 122 may generate one or more sets of criteria 900 to search for items and/or provider objects of the requests 414; such criteria 900 may be generated via a graphic user interface (GUI, not depicted) and the like provided at the I/O devices 404 and provided to the intermediation server 108 via the interface adapter engine 116, and the intermediation server 108 may convert the one or more sets of criteria 900 into formats suitable for the provider systems 102. In particular, the one or more sets of criteria 900 may be to search the provider systems 102 for two tickets from Nice to Toronto on May 9, 2024, one of the tickets being for a person in a wheelchair (and hence may also indicate that both tickets need to be for adjacent seats, only one needing to be for a person in a wheelchair), as well as two hotel rooms for one night in Toronto, with one of the hotel rooms being adapted for persons in wheelchairs, and possibly on a same floor. One or more provider systems 102 may return one or more offers 502-2, which are provided to the terminal 122, and which may be provided at the aforementioned GUI.

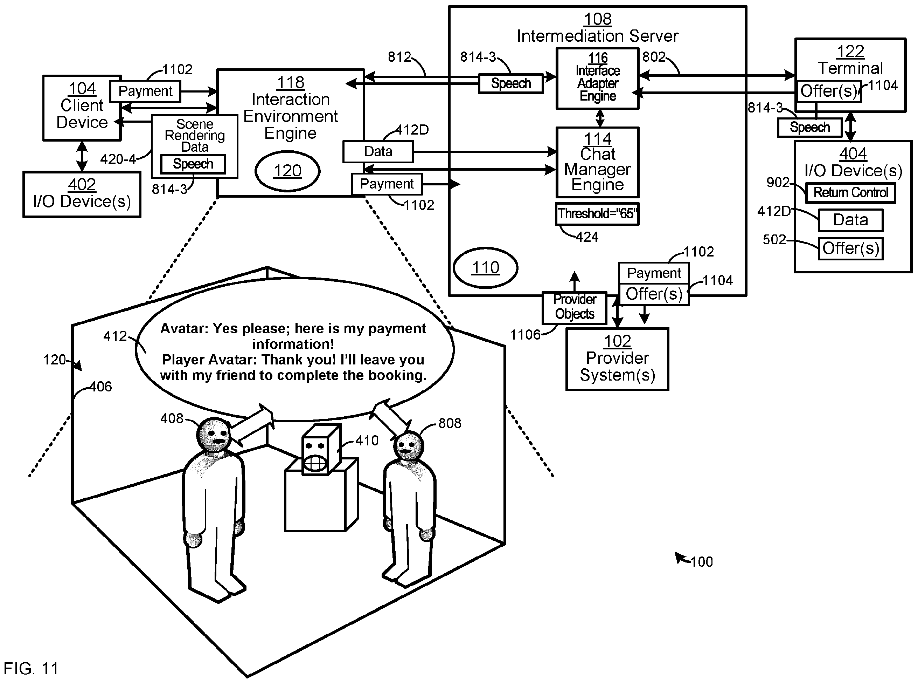

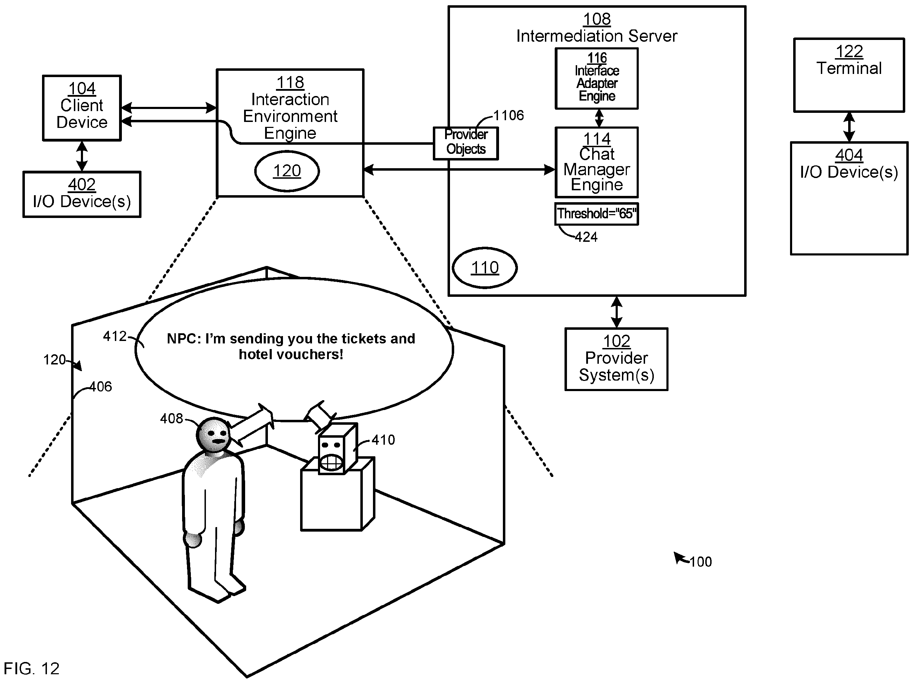

As also depicted in FIG. 9, once the links 802, 812 are established, the take-control user interface component 806 may be replaced with a return-control user interface component 902, which, when actuated, may cause the links 802, 812 to be removed and/or, when the computing-process flow 110 remains at least at the step 302-3, may cause control of the electronic interaction 412 to be transferred to another terminal. An example of actuation of the return-control user interface component 902 is described herein with respect to FIG. 11 and FIG. 12.

While the electronic interaction 412 depicted in FIG. 9 is blank, music, and, the like, may be played in the electronic interaction 412 while the terminal 122 is used to search for items and/or provider objects of the requests 414

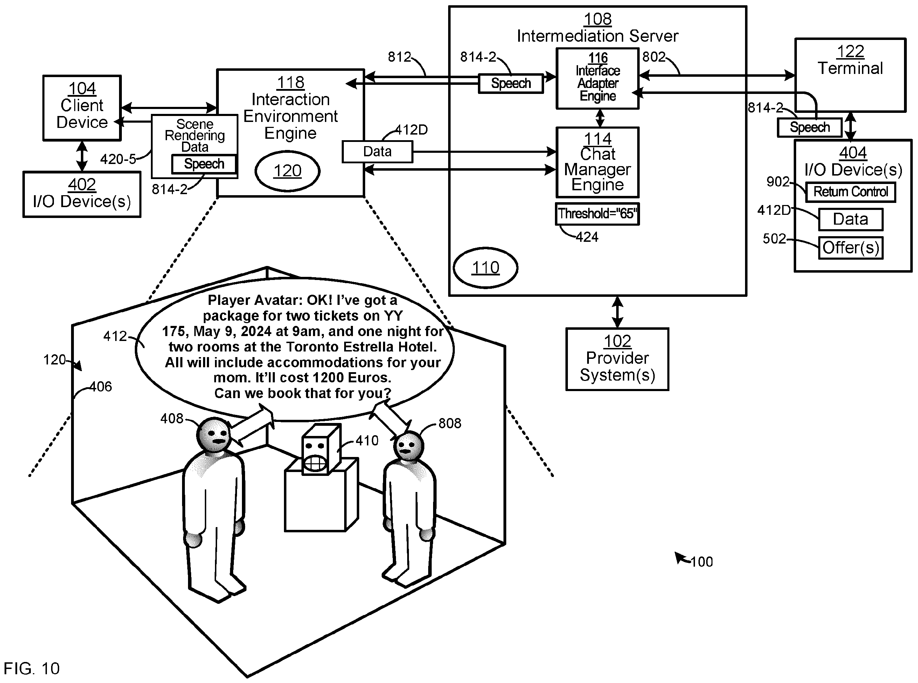

With attention next directed to FIG. 10, the human operator of the terminal 122 may again speak to generate further speech data 814-2 (e.g. speech data 814) which is provided in the electronic interaction 412 via the interface adapter engine 116 and the interaction environment engine 118. For example, as depicted, the speech data 814-2 may comprise: "OK! I've got a package for two tickets on YY175, May 9, 2024 at 9am, and one night for two rooms at the Toronto Estrella Hotel. All will include accommodations for your mom. It'll cost 1200 Euros. Can we book that for you?" Indeed, the content of the speech data 814-2 may reflect a subset of offers 502 selected via the terminal 122.

Also as depicted, the chat manager engine 114 (and/or the intermediation server 108) continues to collect (e.g. at the block 710 of the method 700) updated data 412D of the electronic interaction 412 (e.g. information associated with the electronic interaction 412 with the human-operated terminal 122).

With attention next directed to FIG. 11, the user of the client device 104 may reply, via the avatar 408 "Yes please, here is my payment information" and the user of the client device 104 may operate the client device 104 to send payment information 1102 (e.g. credit card information) and the like to the interaction environment engine 118, which may pass the payment information 1102 to the intermediation server 108 to process payment of the provider objects associated with offers 1104 indicated in the speech data 814-2 (e.g. depicted in FIG. 10). Indeed, the human operator of the terminal 122 may provide the offers 1104 as a subset of the offers 502, to the intermediation server 108 so that the intermediation server 108 (and/or the chat manager engine 114) may provide the payment information 1102 and an indication of the offers 1104 to one or more provider system 102, which return provider objects 1106 corresponding to the offers 1104.

However, payment may occur in any suitable manner, including via third party payment servers, and the like.

While not depicted, it is understood that the reply by the user of the client device 104 may be provided in the electronic interaction 412 in manner similar to the requests 414.

Also as depicted, the chat manager engine 114 (and/or the intermediation server 108) continues to collect (e.g. at the block 710 of the method 700) updated data 412D of the electronic interaction 412 (e.g. information associated with the electronic interaction 412 with the human-operated terminal 122).

As also depicted in FIG. 11, the human operator of the terminal 122 may again speak to generate further speech data 814-3 which is provided in the electronic interaction 412 via the interface adapter engine 116 and the interaction environment engine 118. For example, as depicted, the speech data 814-3 may comprise: "Thank you! I'll leave you with my friend to complete the booking", and may be provided to the client device 104 in yet further updated scene rendering data 420-4.

At this point, the human operator of the terminal 122 may actuate the return-control user interface component 902 to return control of the electronic interaction 412 to the chat manager engine 114. For simplicity, hereafter, generation of further responses by the chat manager engine 114, for the chatbot 410, are not depicted. However, such responses are understood to be based on information associated with the electronic interaction 412 with the human-operated terminal 122.

For example, attention is next directed to FIG. 12 which depicts the system 100 after the return-control user interface component 902 is actuated. The communication links 802, 812 are terminated, and the chat manager engine 114 is controlling the chatbot 410 to provide a response of "I'm sending you the tickets"; the chat manager engine 114 and/or the intermediation server 108 may then (as depicted) provide the provider objects 1106 to the client device 104 via the interaction environment engine 118, and/or in any other suitable manner. Regardless, it is understood that the computing-process flow 110 is completed.

It is hence understood that requesting and/or receiving the provider objects 1106, and/or payment for the provider objects 1106, and the like, is an example of one or more of responding to, and fulfilling the one or more requests 414, via one or more of the chat manager engine 114 and the human-operated terminal 122, based on information collected in the electronic interaction 412 with the human-operated terminal 122 (e.g. at the block 712 of the method 700).

It is furthermore understood that the communication links 802, 812 may be terminated without actuation of the return-control user interface component 902. Rather, with reference to FIG. 11, the speech data 814-3 (e.g. "I'll leave you with my friend to complete the booking") may be processed by the intermediation server 108 to determine that the player avatar 808 is to be removed from the interaction environment 120, the communication links 802, 812 are to be terminated, and the chat manager engine 114 is to take control of the electronic interaction 412.

Attention is next directed to FIG. 13 which depicts an alternative example of the block 708 of the method 700. In particular, rather than insert a player avatar into the interaction environment 120, the terminal 122 may at least partially take over control of speech or text provided by the chatbot 410. In these examples, speech data 1302 provided by the human operator of the terminal 122 may be provided to the chat manager engine 114 via the interface adapter engine 116, which provides the speech data 1302 in the electronic interaction 412. For example, as depicted in FIG. 13, the electronic interaction 412 is the same as, or similar to, the electronic interaction 412 of FIG. 10. For example, the speech data 814-1 of FIG. 8 may be omitted, and the search for offers 502-2 depicted in FIG. 9 may occur. Furthermore, the processes of FIG. 11 and 12 may further occur. While all the components of FIG. 8, FIG. 9, FIG. 10, FIG. 11 and FIG. 12 are not depicted (e.g. such as the handover command 804 and the items provided at the I/O device(s) 404), they may nonetheless be present.

Hence, the player avatar 808 does not appear, and only one additional communication link 802 is established in the system 100.

By now it should be apparent that the score 418 may alternatively be referred to as a "hand-over-to-a-human" score, such that, as described, the lower the score 418, the more likely it is that providing control of the electronic interaction 412 may better result in the computing-process flow 110 being completed.

However, in other examples, the score 418 may be determined in a manner such that, the higher the score 418, the more likely it is that providing control of the electronic interaction 412 may better result in the computing-process flow 110 being completed, with the threshold score 424 adapted accordingly. Hence, at the block 708 of the method 700, the score 418 meeting the threshold score 424 may include the score 418 being higher than the threshold score 424 (e.g. which may remain at "65" or may be lower, such as "45", "40" 45", amongst other possibilities.

Alternatively, at the block 708 of the method 700 the score 418 may meet a threshold condition, which may depend on whether the score 418 increases or decreases with a likelihood that the chat manager engine 114 electronically resolves one or more requests received from the client device 104 in an electronic interaction. For example, the threshold condition may comprise the score 418 being below a threshold score or above a threshold score, or falling or rising at a given rate.

It is understood that the method 700 may include yet further aspects.

For example, the method 700 may further include the controller 202 and/or the intermediating server 108 implementing a feedback loop which better trains the chat manager engine 114 to determine the score 418. For example, data 412D of an electronic interaction 412 may be stored, and rated with a corresponding score indicating whether, or not, a corresponding implementation of the computing-process flow 110 was successful (e.g. the step 302-4 was implemented), or not successful (e.g. the step 302-4 was not implemented), with, or without, transfer of control of the electronic interaction 412 to a human-operated terminal 122, which may be indicated in the data 412D and/or via metadata of the data 412D. Indeed, metadata of such data 412D may include, but is not limited to, profile and/or demographic information of a user operating a client device 104 in such an electronic interaction 412 (e.g. which may be provided by way of a profile and/or demographic information of the user that is provided to, and/or associated with, the interaction environment 120, an identifier of interaction environment 120, types of requests received from the client device 104 (though such requests may be in the body of the data 412D), and the like. Indeed, such training may be used to train the chat manager engine 114 for interacting with a plurality of different interaction environments, and the like.

Indeed, a combination of data 412D and an associated rating score, which may depend on step 302 of the computing-process flow 110 that was achieved via the data 412D. For example, using a scale of 0 to 100, a rating score of "0" may indicate that not even the step 302-1 was reached, a rating score of "25" may indicate that the step 302-1 was reached but not higher steps 302, a rating score of "50" may indicate that the step 302-2 was reached but not higher steps 302, a rating score of "75" may indicate that the step 302-3 was reached but not higher steps 302, and a rating score of "100" may indicate that a successful completion of the computing-process flow 110 occurred via implementation of the step 302-4. Such a rating score may be manually assigned, or assigned via the intermediation server 108 processing which steps 302 of the computing-process flow 110 were implemented via an electronic interaction as described herein. Regardless, the chat manager engine 114 may be placed in a training mode, with data 412D and an associated rating score being used as training data, along with any other suitable data.

As should by now be apparent, the operations and functions of the devices described herein are sufficiently complex as to require their implementation on a computer system, and cannot be performed, as a practical matter, in the human mind. In particular, computing devices, and the lie, such as set forth herein are understood as requiring and providing speed and accuracy and complexity management that are not obtainable by human mental steps, in addition to the inherently digital nature of such operations (e.g., a human mind cannot interface directly with, RAM or other digital storage, cannot transmit or receive electronic messages, cannot set up or terminate communication links, among other features and functions set forth herein).

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

Furthermore, descriptions of one processor and/or controller and/or device and/or engine, and the like, configured to perform certain functionality is understood to include, but is not limited to, more than one processor and/or more than one controller and/or more than one device and/or more than one engine, and the like performing such functionality.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that in some examples, the functionality of devices and/or methods and/or processes described herein may be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein may be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program may be stored as a computer program product comprising a computer usable medium. Further, a persistent storage device may comprise the computer readable program code. It is yet further appreciated that the computer-readable program code and/or computer usable medium may comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium may be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A method (700) comprising:
operating (702), via a chat manager engine (114), a client device (410) in an interaction environment (120);
controlling (704), via the chat manager engine (114), an electronic interaction (412), in the interaction environment (120), between the client device (410) and input received from a client device (104) operated by a human user;
assigning (706), via the chat manager engine (114), a score (418) to the electronic interaction (412), the score (418) indicating likelihood that the chat manager engine (114) electronically resolves one or more requests received from the client device (104) in the electronic interaction (412);
when the score (418) meets a threshold score (418), electronically connecting (708), via the chat manager engine (114), the electronic interaction (412) with a human-operated terminal (122) to at least temporarily, and at least partially, take over the electronic interaction (412), the connection occurring, at least initially, via the chat manager engine (114);
collecting (710), via the chat manager engine (114) or a server (108) implementing the chat manager engine (114), information associated with the electronic interaction (412) with the human-operated terminal (122); and
one or more of responding (712) to, and fulfilling the one or more requests, via one or more of the chat manager engine (114) and the human-operated terminal (122), based on the information.

2. The method (700) of claim 1, wherein the client device (410) comprises one of a web-based client device (410) and an electronic non-player character, and the interaction environment (120) correspondingly comprises one of a web-based chat environment and an immersive environment.

3. The method (700) of claim 1, wherein the score (418) is based on one or more of:
a defined value associated with the one or more requests, the score (418) changing as the defined value changes; and a complexity of the one or more requests, the score (418) changing as the complexity increases as a number of items or provider objects associated with the one or more requests increases, the provider objects representing goods or services offered by one or more provider systems.

4. The method (700) of claim 1, wherein operating the client device (410) in the interaction environment (120) occurs while concurrently implementing a computing-process flow for fulfilling the one or more requests, and
wherein one or more of collecting the information from the electronic interaction (412) with the human-operated terminal (122), responding the one or more requests, and fulfilling the one or more requests, occurs in conjunction with implementing one or more steps of the computing-process flow.

5. The method (700) of claim 1, wherein the client device (410) comprises an electronic non-player character and the interaction environment (120) comprises an immersive environment, and
wherein electronically connecting the electronic interaction (412) with the human-operated terminal (122) comprises:
adding into the immersive environment, a player avatar at least partially operated via the human-operated terminal (122).

6. The method (700) of claim 1, wherein the client device (410) comprises an electronic non-player character and the interaction environment (120) comprises an immersive environment, and
wherein electronically connecting the electronic interaction (412) with the human-operated terminal (122) comprises:
adding, via an interface adapter engine (116), into the immersive environment, a player avatar, the human-operated terminal (122) controlling speech or text of the player avatar; and
transferring control of other operations of the player avatar to the interface adapter engine (116), the interface adapter engine (116) providing an interface between the immersive environment and the human-operated terminal (122).

7. The method (700) of claim 1, wherein the client device (410) comprises an electronic non-player character and the interaction environment (120) comprises an immersive environment, and
wherein electronically connecting the electronic interaction (412) with the human-operated terminal (122) comprises:
enabling, via the chat manager engine (114), the human-operated terminal (122) to control speech or text of the electronic non-player character, while the chat manager engine (114) maintains control over other operations of the electronic non-player character.

8. The method (700) of claim 1, wherein electronically connecting the electronic interaction (412) with the human-operated terminal (122) further occurs via an interface adapter engine (116), and the method (700) further comprises:
adapting, via the interface adapter engine (116), data exchanged between the interaction environment (120) and the human-operated terminal (122) for the interaction environment (120) and the human-operated terminal (122).

9. The method (700) of claim 1, wherein electronically connecting the electronic interaction (412) with the human-operated terminal (122) further occurs via an interface adapter engine (116), and the method (700) further comprises:
providing, via the interface adapter engine (116), at an output device of the human-operated terminal (122) a user interface component that, when actuated, causes the human-operated terminal (122) to at least temporarily, and at least partially, take over the electronic interaction (412); and,
when actuation of the user interface component is received, electronically connecting, via the chat manager engine (114) and the interface adapter engine (116), the electronic interaction (412) with the human-operated terminal (122).

10. The method (700) of claim 1, wherein one or more of responding to, and fulfilling the one or more requests, via one or more of the chat manager engine (114) and the human-operated terminal (122), based on the information comprises:
transferring full control of the electronic interaction (412) back to the chat manager engine (114) prior to fulfilling the one or more requests; and
fulfilling the one or more requests via the chat manager engine (114) based the information collected via the human-operated terminal (122).

11. A computing device comprising:
a communication interface;
a controller; and
a computer-readable storage medium having stored thereon program instructions that, when executed by the controller, cause the controller to perform a set of operations comprising the method (700) of any one of claims 1 to 10.

12. A non-transitory computer-readable storage medium having stored thereon program instructions that, when executed by computing device, cause the computing device to perform the method (700) of any one of claims 1 to 10.
